# EUROPÄISCHE PATENTSCHRIFT

(11) **EP 1 264 789 B1**
(45) Veröffentlichungstag und Bekanntmachung des Hinweises auf die Patenterteilung: **13.10.2004**
(21) Anmeldenummer: 02008161.8
(22) Anmeldetag: 15.04.2002
(51) Int. Cl.: B65G 67/60

(54) **Verfahren und Einrichtung zum Umschlag von Umschlaggut zwischen zwei Lagerstellen**
Method and device for loading cargo between two storage positions
Procédé et dispositif pour transbordement de marchandise entre deux postes de stockage

(30) Priorität: 07.06.2001 DE 10127448
(43) Veröffentlichungstag der Anmeldung: 11.12.2002
(73) Patentinhaber: SSG Schiffahrts- und Speditionsgesellschaft, Meyer & Co. GmbH, 27568 Bremerhaven (DE)
(72) Erfinder: Ficke, Dieter, 28816 Stuhr (DE); Fröhlich, Marc, 28279 Bremen (DE); Pfaus, Fred, 27777 Ganderkesee (DE); Schroeder, Heiko, 28203 Bremen (DE)
(74) Vertreter: Hoormann, Walter, Dr.-Ing.

(56) Entgegenhaltungen:
- EP-A- 0 413 131
- EP-A- 0 471 411
- EP-A- 0 567 057
- DE-C- 4 101 487

## Beschreibung

Die vorliegende Erfindung betrifft ein Verfahren zum Umschlagen von zu transportierenden Umschlaggütern, insb. von Stückgut wie Bananen, nach dem oberbegriff des Ansprüches 1.

Die vorliegende Erfindung betrifft weiterhin eine Einrichtung zur Durchführung des vorgenannten Verfahrens nach dem Oberbegriff des Anspruches 11. Obst, wie bspw./insb. Bananen, welches in Ländern mit relativ warmem Klima gezüchtet bzw. angebaut und von dort häufig über große Entfernungen in Verbraucherländer exportiert wird, wird wegen der damit verbundenen Frachtkosten i.a. nicht mit Flugzeugen, sondern mit Frachtschiffen transportiert. Frachtschiffe weisen bekanntlich wenigstens einen Laderaum (i.a. mehrere Laderäume) auf, der häufig dem Frachtgut entsprechend angepaßt ist. So sind Frachtschiffe für den Transport von Bananen i.a. klimatisiert, da Bananen i.a. in einem noch unreifen, grünen Zustand geerntet und verschifft werden, wobei sich der Reifungsprozeß während des Transportes fortsetzt. Um zu verhindern, daß dieses unkontrolliert (und ggf. zu rasch) geschieht, was ggf. zu einer Qualitätsbeeinträchtigung (ggf. bei Überreife zu einem Totalverlust der Ladung) führen könnte, hält man Bananen daher während der Überfahrt vom Erzeugerland zum Verbraucherland auf einer vorgegebenen, günstigen Temperatur.

Aber auch im übrigen handelt es sich bei Bananen (wie auch bei anderen Früchten, Gemüse, Blumen oder sonstigen Pflanzen) um relativ empfindliches Fördergut, welches demgem. auch im übrigen entsprechend behutsam zu behandeln ist/behandelt werden sollte, und zwar nicht nur während des Transportes, sondern auch während des Umschlages, also beim Be- und Entladen eines Frachtschiffes. Denn auch Umwelteinflüsse wie Niederschläge, feiner Flugsand oder sonstige Verunreinigungen können empfindliche Umschlaggüter ggf. höchst nachteilig beeinflussen.

Obwohl diese Anforderungen seit eh und je bestens bekannt sind, werden Bananen stauden in den Erzeugerländern - allenfalls durch eine häufig höchst mangelhafte Verpackung geschützt - nach häufig von Hafenarbeitem Stück für Stück nacheinander an Bord getragen und an der jeweils vorgesehenen geöffneten Ladeluke des jeweiligen Laderaums in einen an ein bordeigenes Ladegeschirr angeschlagenen Förderbehälter gelegt, der nach Befüllung sodann mittels des Ladegeschirrs (i.a. einer Winde) aus seiner angehobenen Beladestellung nach unten in den Laderaum abgesenkt und auf Laderaum-Bodenniveau entleert wird. Der Förderbehälter wird dann mittels des Ladegeschirrs wieder bis zur Oberkante der Ladeluke angehievt, erneut mit Bananen stauden beladen etc. Hier und dort werden die Förderbehälter auch bereits an der Pier befüllt und mittels eines Hebezeuges zum Schiff transportiert, wobei ein an der jeweiligen (geöffneten) Schiffs-Ladeluke positionierter Warschaumann dann den mit Umschlaggut beladenen Förderbehälter in die geöffnete Ladeluke leitet.

All das geschieht regelmäßig auch dann, wenn beim Be- oder Entladen eines Schiffes ggf. schwere Regengüsse niedergehen, oder das Schiff durch einen Sandsturm beaufschlagt wird, schon weil die Hafen-Liegezeiten von Schiffen (u.a. wegen der erheblichen Liegegebühren) regelmäßig so kurz wie irgend möglich gehalten werden, und eine Be- oder Entladung eines Schiffes daher nicht wegen negativer Witterung unterbrochen wird. Das hat nun aber zwangsläufig zur Folge, daß nicht nur die die externe Beladung durchführenden Personen, sondern auch das Umschlaggut selbst durch Umwelteinflüsse in oft höchst mißlicher Weise beaufschlagt wird, so daß die Qualität entsprechend beeinträchtigt wird.

Aus der DE-C-41 01 487 ist ein Schiffsbe- und/oder -entlader für Stückgut mit einem an einem Portal angeordneten Ausleger bekannt, an dem mehrere längs des Auslegers verfahrbare Laufkatzen angeordnet sind. Zwei innere Laufkatzen weisen jeweils im Bereich des Auslegers eine an zwei einander gegenüberliegenden Seiten offene, U-förmige Wetterschutzhaube auf; welche beim Beladen eines Schiffes jeweils einen am Pier mit Stückgut beladenen, an die betreffende Laufkatze angeschlagenen Förderbehälter in sich aufnehmen, wenn dieser von der betreffenden Laufkatze bis unterhalb des Auslegers angehoben und die so gebildete Umschlageinheit entlang des Auslegers bis über die geöffnete Be- und Entladeöffnung des Schiffes gefördert wird. Dort werden die Umschlageinheiten jeweils in den oberen Endabschnitt eines an einer äußeren dritten Laufkatze angeordneten Faltenlbalges eingefahren, welcher an seinem unteren Endabschnitt in eine Plane ausläuft und mit der geöffneten Schiffsluke so verbunden ist, daß er einen Wetterschutzschacht bildet. Nach dem seitlichen Einfahren einer Umschlageinheit in den Wetterschutzschacht wird jeweils ihr Förderbehälter relativ zu der ihn umgebenden Haube von der betreffenden Laufkatze in den Laderaum des Schiffes abgesenkt. Ein Entladen eines Schiffes erfolgt in umgekehrter Reihenfolge der genannten Schritte.

Ein ähnlicher Schiffsbe- und Entlader ist aus der EP-A-0 471 411 bekannt, bei dem jeweils ein beladener Förderbehälter beim Anheben an d er Pier durch eine erste L aufkatze in eine Haube gezogen und nach seiner Förderung längs des Auslegers an dessen anderem Endabschnitt an einer umhüllten Parkstation abgesetzt wird, wo er von einer zweiten Laufkatze aufgenommen und innerhalb eines von einem Faltenbalg gebildeten Wetterschutzschachtes, welcher die am Ausleger angeordnete Parkstation mit der Be- und Entladeöffnung des Schiffes verbindet, in den Laderaum des Schiffes abgesenkt wird.

Der vorliegenden Erfindung liegt die Aufgabe zugrunde, die bekannten Verfahren und Einrichtungen der eingangs beschriebenen Gattung insb. dahingehend zu verbessern, daß das Umschlaggut beim Umschlagen weitgehend (möglichst vollständig) gegen Umwelteinflüsse der beschriebenen Art geschützt ist, wobei sowohl das Umschlagverfahren als auch die Einrichtung zu dessen Durchführung so einfach wie irgend möglich sein sollen, zumal relativ komplizierte Arbeitsverfahren und/oder Einrichtungen insb. in Ländern der sog. Dritten Welt die dortigen Möglichkeiten überfordern, und es soll die bisher mit konventionellen Verfahren bzw. Mitteln erzielte Umschlagleistung dennoch möglichst wenigstens annähernd aufrecht zu erhalten (vorzugsweise noch - ggf. erheblich - zu erhöhen) sein.

Die Lösung des verfahrensmäßigen Teils der vorstehenden Aufgabe erfolgt erfindungsgemäß durch die kennzeichnenden Merkmale des Anspruches 1, während die Lösung des einrichtungsmäßigen Teils der vorstehenden Aufgabe erfindungsgemäß durch das Kennzeichen des Anspruches 11 erfolgt.

Bevorzugte Ausgestaltungen der vorliegenden Erfindung verfahrenstechnischer und einrichtungsmäßiger Art sind in Unteransprüchen beschrieben.

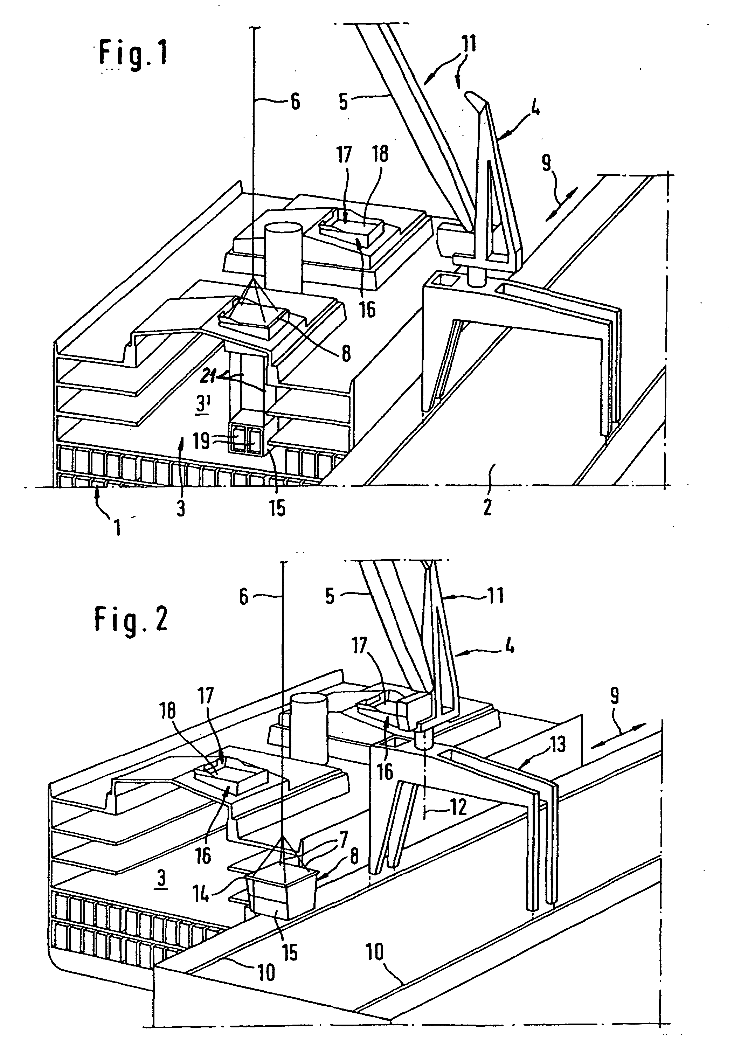

Die Erfindung wird nachstehend an Ausführungsbeispielen unter Bezugnahme auf eine (z.T. stark schematisierte) Zeichnung (Fig. 1 - 13) weiter erläutert, wobei sich diese Erläuterungen überwiegend auch ganz allgemein auf die vorliegende Erfindung beziehen, soweit sie nicht ganz spezielle Ausgestaltungen betreffen, die ersichtlich auch (ggf. in vielfältiger Weise) modifiziert werden können, ohne den Rahmen der Erfindung zu verlassen. Es zeigt:
- **Fig. 1**: eine perspektivische Teildarstellung eines (Hafen-)Piers, eines Pier-Krans, und eines Frachtschiffes, sowie einer erfindungsgemäßen Umschlageinrichtung in einer Draufsicht schräg von oben gesehen, und zwar bei auf die Ladefläche des Laderaums abgesenktem, beladenem Umschlagkorb;
- **Fig. 2**: (in einer Darstellung i.w. gem. Fig. 1) die Darstellung gem. Fig. 1, wobei eine leere Umschlageinheit gerade von dem Pier-Kran aufgenommen worden ist;
- **Fig. 3**: eine i.w. den Fig. 1 und 2 entsprechende Darstellung, wobei die leere Umschlageinheit gerade in eine zum Laderaum des Schiffes führende Ladeluke von oben her eingefahren wird;
- **Fig. 4**: eine i.w. den Fig. 1 - 3 entsprechende Darstellung, wobei der leere Umschlagkorb relativ zu der Umschlaghaube der Umschlageinheit bereits teilweise abgesenkt ist, und die Ladeluke durch die Umschlaghaube regen- und staubdicht verschlossen ist;
- **Fig. 5**: eine i.w. den Fig. 1 - 4 entsprechende Darstellung, wobei der Umschlagkorb in seine Decksposition auf die Ladefläche des Laderaums abgesenkt ist;
- **Fig. 6**: eine i.w. den Fig. 1 - 5 entsprechende Darstellung, wobei der - zwei Beladeabteile aufweisende - Umschlagkorb zwischenzeitlich mit Umschlaggut beladen ist, nämlich mit vier Fruchtpaletten;
- **Fig. 7**: eine i.w. den Fig. 1 - 6 entsprechende Darstellung, wobei der beladene Umschlagkorb wieder (wie in Fig. 2 im leeren Zustand) in die Umschlaghaube eingezogen worden ist, und die gesamte Umschlageinheit soweit angehoben worden ist, daß sie von der Ladeluke frei ist;
- **Fig. 8**: eine i.w. den Fig. 1 - 7 entsprechende Darstellung, wobei die beladene Umschlageinheit von dem Pier-Kran aus der Position gem. Fig. 7 zwischenzeitlich in Richtung zur Pier/auf die Kaje geschwenkt worden ist;
- **Fig. 9**: eine i.w. den Fig. 1 - 8 entsprechende Darstellung, wobei der Umschlagkorb zwischenzeitlich auf der Pier abgesetzt und die Umschlaghaube relativ zu dem Umschlagkorb soweit von dem Pier-Kran angehoben worden ist, daß der Umschlagkorb frei (zugänglich) ist;
- **Fig. 10**: die Darstellung gem. Fig. 9, wobei zwei Ladeeinheiten zwischenzeitlich aus dem Umschlagkorb entladen und - neben dem Umschlagkorb - auf der Pier abgestellt worden sind;
- **Fig. 11**: eine Darstellung gem. 10, wobei der Umschlagkorb zwischenzeitlich von seinem gesamten Umschlaggut (vier palettengestützte Ladeeinheiten) entladen ist, so daß ggf. ein neuer Entladezyklus eingeleitet werden kann;
- **Fig. 12**: eine (schematische) Draufsicht auf eine Abdeckung in einem auf eine Ladeluke aufgesetzten, montierten, geschlossenen Zustand;
- **Fig. 13**: die Abdeckung gem. Fig. 12 in einem teilweise geöffneten, (dennoch) regendichten Zustand mit einer in die Abdeckung (sowie damit die Ladeluke) von oben her eingefahrenen Umschlageinheit;
- **Fig. 14**: eine Fig. 1 entsprechende, bzgl. des Umschlagkorbes und der Umschlaghaube weniger schematisierte Darstellung, wobei - abweichend von Fig. 1 - im rechten Teil zusätzlich der (ein) Pier-Kran auch noch mit einer im Pier-Bereich an ihn angeschlagenen Ladeeinheit dargestellt ist;
- **Fig. 15**: ein gegenüber der konventionellen Ausbildung leicht modifizierter Palettenkorb in perspektivischer Darstellung;
- **Fig. 16**: die in Fig. 15 mit einem strichpunktierten Kreis umrandete und mit XVI bezeichnete Einzelheit an einer oberen Ecke des (i.w. konventionellen) Palettenkorbes mit der dort vorgesehenen Eck-Aufhängung;
- **Fig. 17**: einen um seine Längsmittelachse im angeschlagenen Zustand drehbaren Palettenkorb;
- **Fig. 18**: eine Umschlaghaube mit Abdeckplane in perspektivischer Darstellung;
- **Fig. 19**: die Umschlaghaube gem. Fig. 18 ohne Abdeckplane;
- **Fig. 20**: eine zylindrische Abdeckplane für einen drehbaren Palettenkorb gem. Fig. 17;
- **Fig. 21**: eine mit einer Abdeckung abgedeckte Ladeluke eines Schiffes in stark verkleinerter, perspektivischer Darstellung;
- **Fig. 22**: die Ladeluken-Abdeckung der Darstellung gem. Fig. 21;
- **Fig. 23**: ein Abdeckelement der Ladeluken-Abdeckung gem. den Fig. 21 bzw. 22;
- **Fig. 24**: einen Grundrahmen der Ladeluken-Abdeckung gem. den Fig. 21 bzw. 22 in (gegenüber den Fig. 21, 22) vergrößerter Darstellung;
- **Fig. 25**: eine zur Abdeckung gem. den Fig. 21, 22 gehörende Plattform;
- **Fig. 26**: einen zur Ladeluken-Abdeckung gem. den Fig. 21, 22 gehörenden Einweistrichter;
- **Fig. 27**: einen aus der Plattform gem. Fig. 25 sowie dem Einweistrichter gem. Fig. 26 bestehenden, auf dem Grundrahmen gem. Fig. 24 verfahrbaren Schlitten;
- **Fig. 28**: einen gegenüber den Fig. 21 - 27 stark vergrößerten Gleitschuh des auf dem Grundrahmen gem. Fig. 24 verfahrbaren Schlittens gem. Fig. 27;
- **Fig. 29**: ein Ausführungsbeispiel einer landseitigen Palettenentnahme mit einem mit einer Durchgangsöffnung versehenen Absetztisch, an dessen Oberseite ein der Durchgangsöffnung zugeordnetes Einweissegment angeordnet ist, wobei bei der Darstellung gem. Fig. 29 eine Umschlaghaube über der Durchgangsöffnung abgesetzt ist, und der ihr zugeordnete Umschlagkorb relativ zu der Umschlaghaube bereits auf die als Lager- und Transportfläche dienende Pier abgesenkt ist;
- **Fig. 30**: eine i.w. Fig. 21 entsprechende Darstellung, anhand welcher der Funktionsablauf erläutert wird;
- Fig. 31: einen (nicht drehbaren) Palettenkorb nebst über diesem angeordneter Umschlaghaube (ohne Abdeckplane);
- **Fig. 32**: einen um seine Mittellängsachse drehbaren Palettenkorb gem. Fig. 17, der von der ihm zugeordneten Umschlaghaube (gem. Fig. 20) i.w. überdeckt ist;
- **Fig. 33**: eine stark schematisierte Draufsicht auf eine Be- bzw. Entladeöffnung (Ladeluke) mit Abdeckung (a)) bzw. ohne Abdeckung (b));
- **Fig. 34**: eine i.w. Fig. 14 entsprechende Darstellung, bei welcher der Umschlagkorb der auf die Ladeluke aufgesetzten Ladeeinheit zwecks Entladung in den Laderaum eines Schiffes abgesenkt ist, während die Ladeluke von der Abdekkung abgedeckt ist, und die freie Durchgangsöffnung des Einweistrichters von der Umschlaghaube überdeckt ist; und
- **Fig. 35**: eine vergrößerte Teildarstellung des linken (Schiffs-)Teils von Fig. 34, bei welcher der Ladekorb durch die Ladeluke bis auf das vierte Ladedeck des Laderaums abgesenkt ist.

Die Figuren 1 - 11 der Zeichnung zeigen - stark schematisiert - eine typische Be- bzw. Entladesituation beim Stückgut-Umschlag aus einem Frachtschiff 1 an die Pier 2 eines Hafens (Schiffsentladung), bzw. umgekehrt, von der Pier 2 in den Laderaum 3 eines Schiffes 1 (Schiffsbeladung), und zwar jeweils mit Hilfe eines Pier-Krans 4, wobei vom (in der Zeichnung nicht erkennbaren) freien Ende des Auslegers 5 des Krans 4 ein Seil 6 herunterhängt, an dessen freiem unteren Ende ein auch als "Geschirr" bezeichnetes Anschlagmittel 7 angeordnet ist, mittels dessen Stückgut (hier: jeweils eine im ganzen mit 8 bezeichnete Umschlageinheit) an den Kran 4 anzuschlagen, und mittels einer im einzelnen nicht dargestellten Winde anzuheben ist. Bei dem Kran 4 handelt es sich um einen in Richtung des Doppelpfeils 9 längs der Pier 2 auf zwei parallelen Schienen 10 verfahrbaren Bockkran, dessen im Ganzen mit 11 bezeichnetes Oberteil um eine vertikale Schwenkachse 12 relativ zum Unterteil 13 des Krans 4 dreh- bzw. schwenkbar ist.

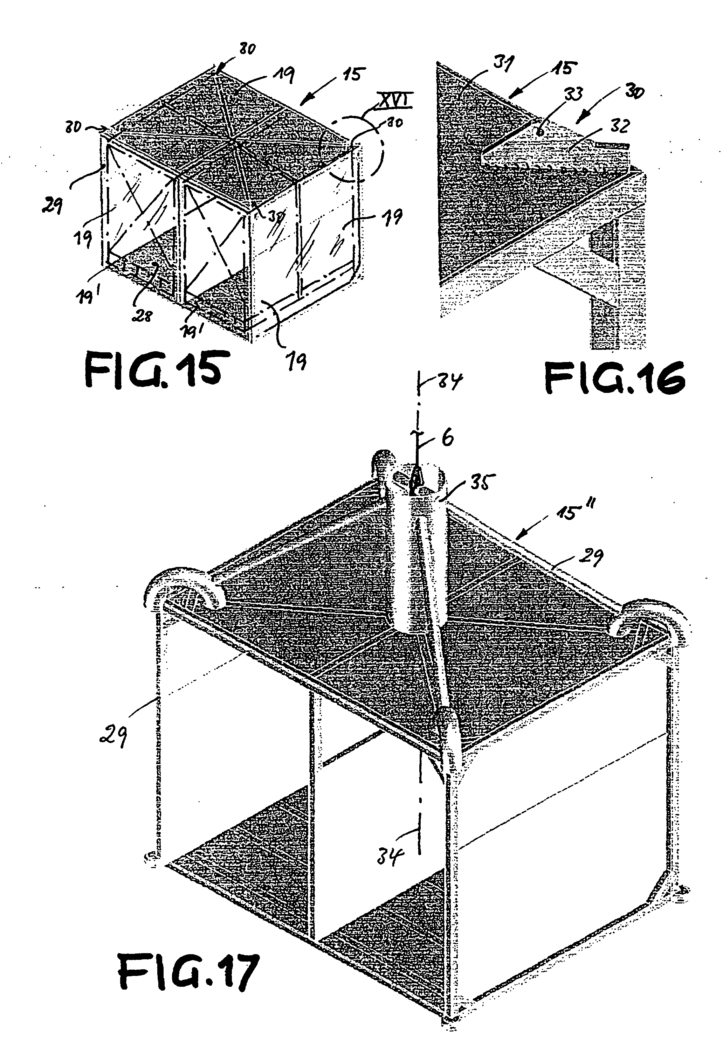

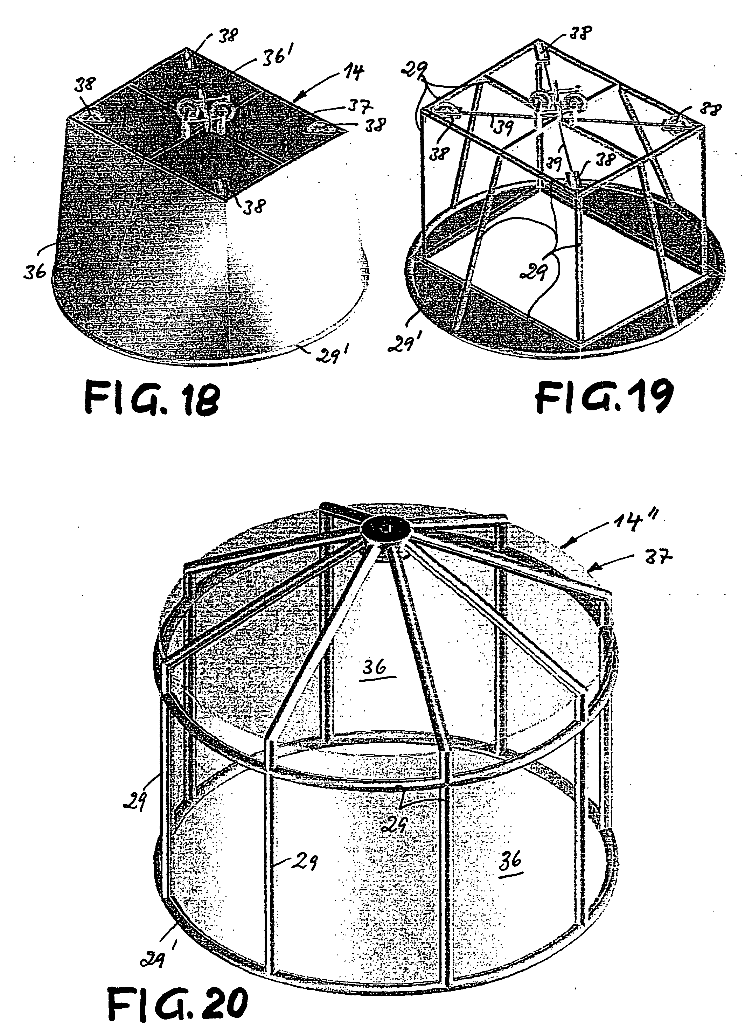

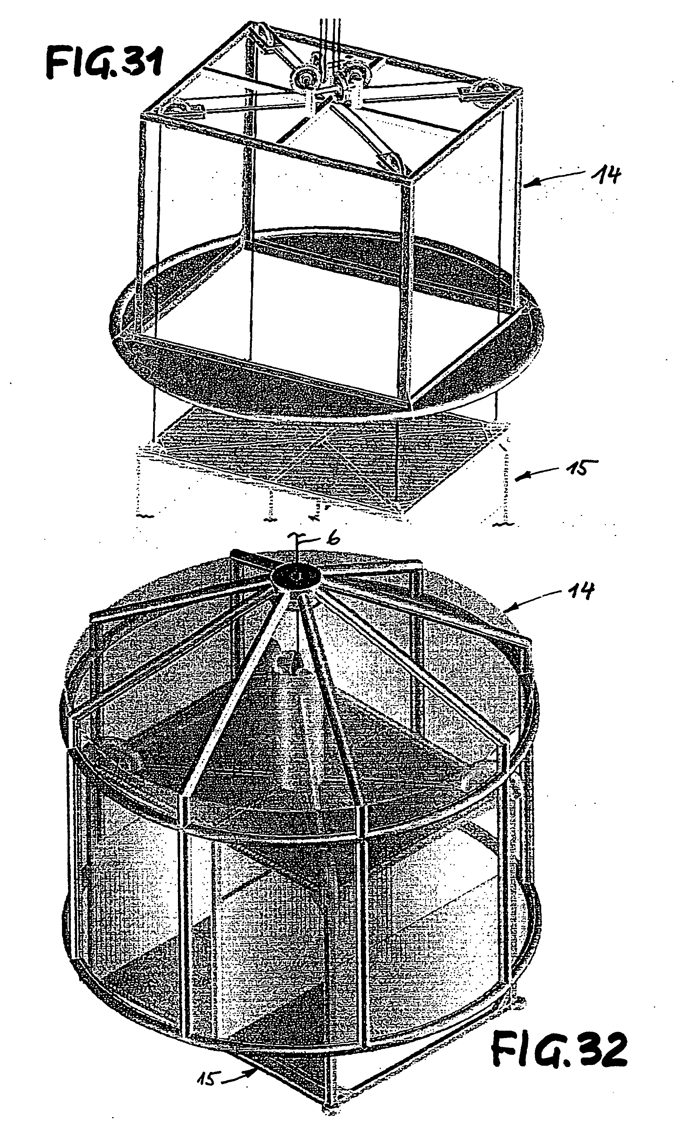

Die Umschlageinheit 8 besteht aus einer Umschlaghaube 14 (s. z.B. Fig. 18, 20, 29, 31, 32, 34, 35) und einem von dieser überdeckten Umschlagkorb 15 (s. z.B. Fig. 15, 16, 17, 19, 29, 31, 32, 34, 35), die weiter unten noch im einzelnen beschrieben werden, sowie ggf. dem im Umschlagkorb 15 gestauten Umschlaggut.

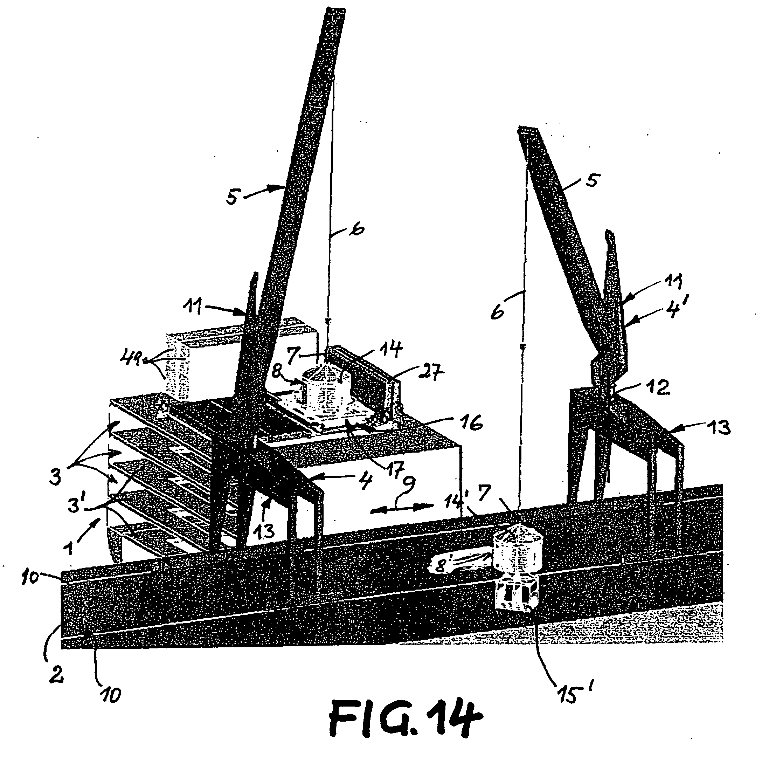

Der Laderaum 3 des Frachtschiffes 1 ist mit wenigstens einer Be- bzw. Entladeöffnung 16 versehen, die häufig auch als "Ladeluke" bezeichnet wird. Der Laderaum 3 kann (wie bei dem beispielhaft dargestellten Ausführungsbeispiel) ggf. mehretagig ausgebildet sein, und ist im übrigen nach außen hin i.w. geschlossen. Dabei werden die Ladeluken 16 von Schiffen 1 während der Fahrt üblicherweise mit einem hochschwenkbaren oder aufsetzbaren Deckel verschlossen und lösbar verriegelt, und im Hafen für den Be- oder Entladevorgang geöffnet. Die Fig. 1 - 11 zeigen beispielhaft ein Schiff 1 mit drei übereinander angeordneten Ladedecks, und die Fig. 14, 30, 34 und 35 vier bzw. fünf parallel übereinander liegende "Lade-Etagen". In jedem Fall ist der mittlere Laderaumbereich unterhalb der jeweiligen Ladeluke 16 schachtartig ausgespart, um die einzelnen Decks (A-Deck, B-Deck u. s. f.) überhaupt be- und entladen zu können, wobei jedoch auch dieser Bereich i.a. beladen wird, wie weiter unten noch erläutert ist.

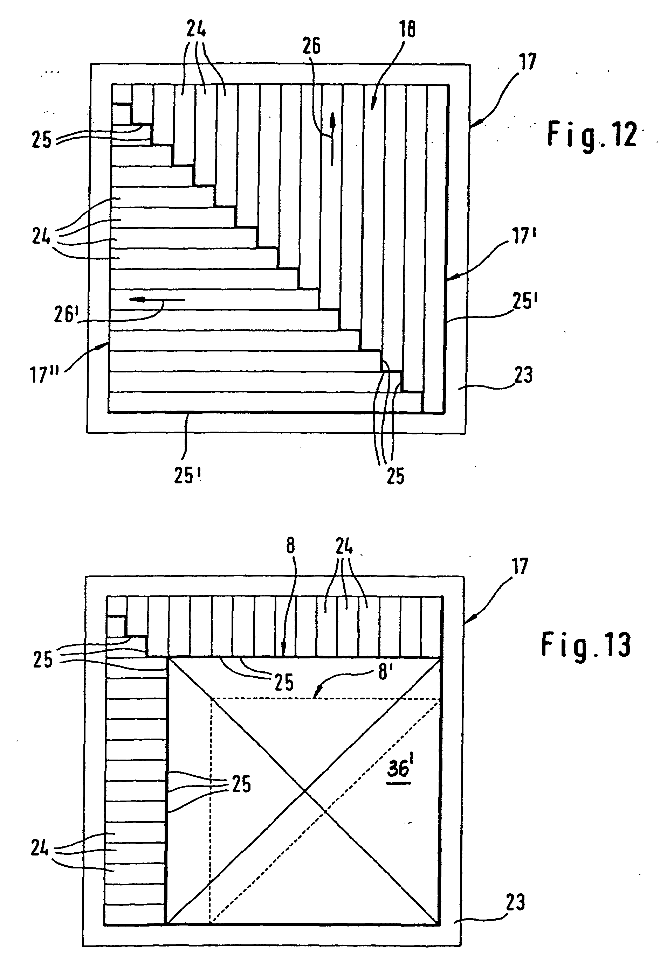

Im vorliegenden Falle ist jeweils auf eine (wenigstens teilweise geöffnete) Ladeluke 16 eine in ganzen mit 17 bezeichnete Abdeckung (entweder mittels des Pier-Krans 4 oder mit bordeigenem Geschirr) aufgesetzt, wodurch die konventionell vorhandene lichte Öffnungsfläche einer Ladeluke 16 jeweils auf etwa 10% (bspw. von ca. 150 m² auf 15 m² ) reduziert wird. Die Abdeckung wird weiter unten noch anhand der Fig. 12, 13 bzw. der Fig. 21 - 28, 30, 34 und 35 an bevorzugten Ausführungsbeispielen erläutert.

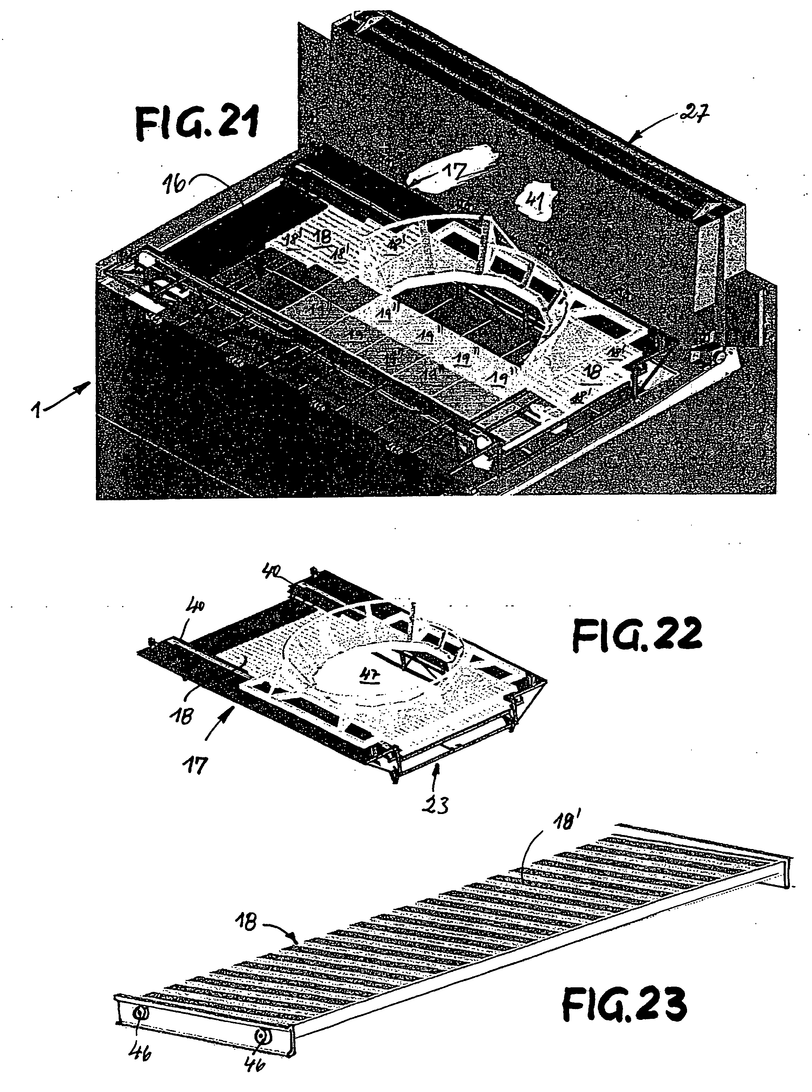

Es sei darauf verwiesen, daß (auch) die Abdeckung 17 an sich eine (verschließbare) Durchgangsöffnung aufweist, die von einer solchen Größe und Form ist, daß sie den Außenkonturen einer Umschlageinheit 8 bzw. deren Umschlaghaube 14 angepaßt ist, wobei die Abdeckung 17 mit einem Abdeckmittel 18 versehen sein kann, welches ihre Durchgangsöffnung im Ruhezustand i.w. regendicht verschließt, welches aber beim Einfahren einer Umschlageinheit 8 - z.B. durch eine entsprechende Steuerung mit entsprechenden Gebern vorzugsweise selbsttätig - zu öffnen ist, und welches sich beim Ausfahren der Umschlageinheit 8 aus der Abdeckung 17 - vorzugsweise wiederum selbsttätig gesteuert - wieder schließt, so daß auch die (gegenüber der üblichen, konventionellen Ladeluken-Öffnungsfläche mittels der Abdeckung 17 ganz erheblich reduzierte) Durchgangsöffnung der Abdeckung 17 stets wetter- und staubgeschützt verschlossen ist, nämlich entweder durch ihr Abdeckmittel 18, oder aber durch die Umschlaghaube 14 einer in die Ladeluke 16 bzw. deren Abdeckung 17 eingefahrenen Umschlageinheit 8 (s.a. z.B. Fig. 12, 13 und die sich hierauf beziehende Beschreibung sowie Fig. 21 ff. nebst zugehöriger Beschreibung).

Nachdem wesentliche Komponenten der erfindungsgemäßen Umschlageinrichtung anhand der Fig. 1 und 2 prinzipiell kurz beschrieben worden sind, wird nachstehend nunmehr das erfindungsgemäße Umschlagverfahren anhand des in der Zeichnung zunächst wiedergegebenen Ausführungsbeispiels (Fig. 1 - 13) im einzelnen weiter erläutert, und zwar am Beispiel einer Schiffsentladung. Die Beladung eines Schiffes erfolgt mittels derselben Einrichtung und mit denselben Verfahrensschritten, jedoch logischerweise i.w. in umgekehrter Reihenfolge:

Wie bereits weiter oben dargelegt worden ist, soll mit dem erfindungsgemäßen Umschlagsystem insb. ein wettergeschütztes Be- bzw. Entladen von Transportfahrzeugen - ohne zusätzliche Förderanlagen - erfolgen, und zwar bei dem konkreten Ausführungsbeispiel ein Löschen sog. Fruchtpaletten aus einem Bananenfrachter.

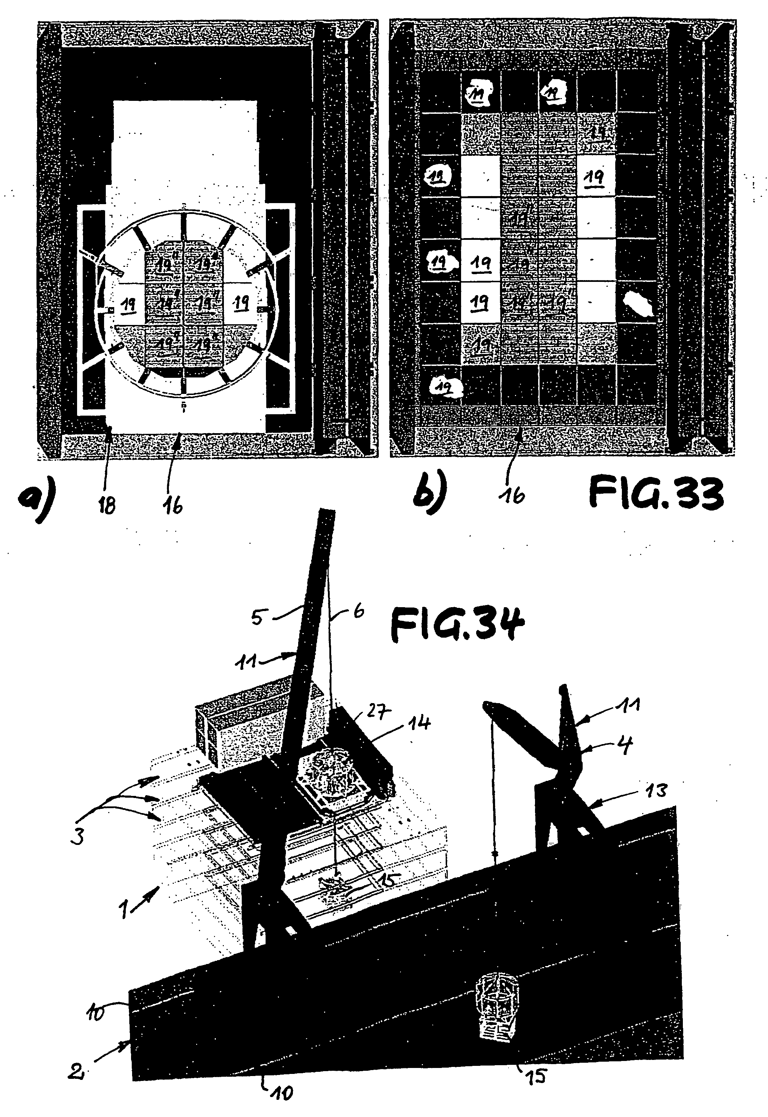

Wenn das Schiff 1 zwecks Entladung am Pier 2 angelegt hat, werden zunächst die Ladeluken 16 (wenigstens teilweise) geöffnet, und es werden die während der Überfahrt geschlossenen und verriegelten Lukendeckel der Ladeluken 16 jeweils erfindungsgemäß durch eine Abdekkung 17 ersetzt. Dieses erfolgt in der Regel mit bordeigenem Geschirr (also mit fest am Schiff installierten Schiffswinden od.dgl.), kann ggf. aber auch mittels eines Pier-Krans 4 od.dgl. erfolgen, der nachfolgend (als einziges Fördermittel) die Beladung durchführt. Dabei kann je nach den gegebenen Umständen des Einzelfalls ein Kran 4 zum Einsatz kommen, ggf. und vorzugsweise aber auch deren mehrere (s. Fig. 14, 34). Abweichend von der stark schematisierten Darstellung der Fig. 1 - 11 kommen bei dem konkreten Ausführungsbeispiel vier Pier-Krane 4 zum Einsatz, und zwar jeweils zwei Krane 4 für jede der beiden Ladeluken 16 des Frachters 1, wie dieses z.B. in Fig. 14 bzgl. der dort ersichtlichen Ladeluke 16 gezeigt ist.

In einem solchen oder ähnlichen Einsatzfall werden mithin auch beide Ladeluken 16 vor Beginn der Entladung jeweils mit einer Abdeckung 17 versehen. In anderen Fällen kann es ausreichend sein, lediglich mit nur einer Abdeckung 17 16 zu arbeiten, die dann zunächst auf eine erste Ladeluke 16 aufgesetzt, und ggf. später beim Fortschritt des Ent- oder Beladevorgangs von dieser ersten Ladeluke 16 auf eine andere Ladeluke 16 umgesetzt wird. Da - wie oben bereits ausgeführt worden ist - die Liegezeiten von Schiffen in einem Hafen relativ kostenträchtig sind, und sie seitens der Reederei natürlich auch im Hinblick auf eine möglichst optimale Nutzung eines Schiffes aus noch anderen Gründen möglichst kurz gehalten werden sollen, ist es regelmäßig vorteilhaft, die Be- bzw. Entladung simultan an zwei oder mehr Ladeluken durchzuführen.

Sollte es nach dem Öffnen der Ladeluken 16 und dem Aufsetzen der Abdeckungen 17 noch vor Beginn der Ent- bzw. Beladung zu Niederschlägen kommen, ist dieses unkritisch, weil der Laderaum 3 trotz der geöffneten Schiffsluken durch die Abdeckung(en) 17 i.w. regendicht verschlossen (also wettergeschützt) ist (sind).

Während Fig. 1 einen (späteren) Zustand zeigt, in dem der mit vier Fruchtpaletten 19 beladene Umschlagkorb 15 der an den Pier-Kran 4 angeschlagenen Umschlageinheit 8 relativ zu der Umschlaghaube 14 der Umschlageinheit 8 bis auf den (untersten) Boden 3' des Laderaums 3 des Schiffes 1 abgesenkt ist, zeigt Fig. 2 den eigentlichen Beginn eines Entladezyklus, nämlich nachdem der Pier-Kran 4 eine leere Umschlageinheit 8 vom Pier 2 gerade aufgenommen und etwas angehievt hat.

Die Umschlageinheit 8 wird sodann mittels des Pier-Krans 4 über das Schiff 1 verschwenkt und über einer (mittels einer Abdeckung 17 abgedeckten) Ladeluke 16 in Position gebracht, um sodann gem. dem Pfeil 20 auf/in die Ladeluke 16 abgesenkt zu werden.

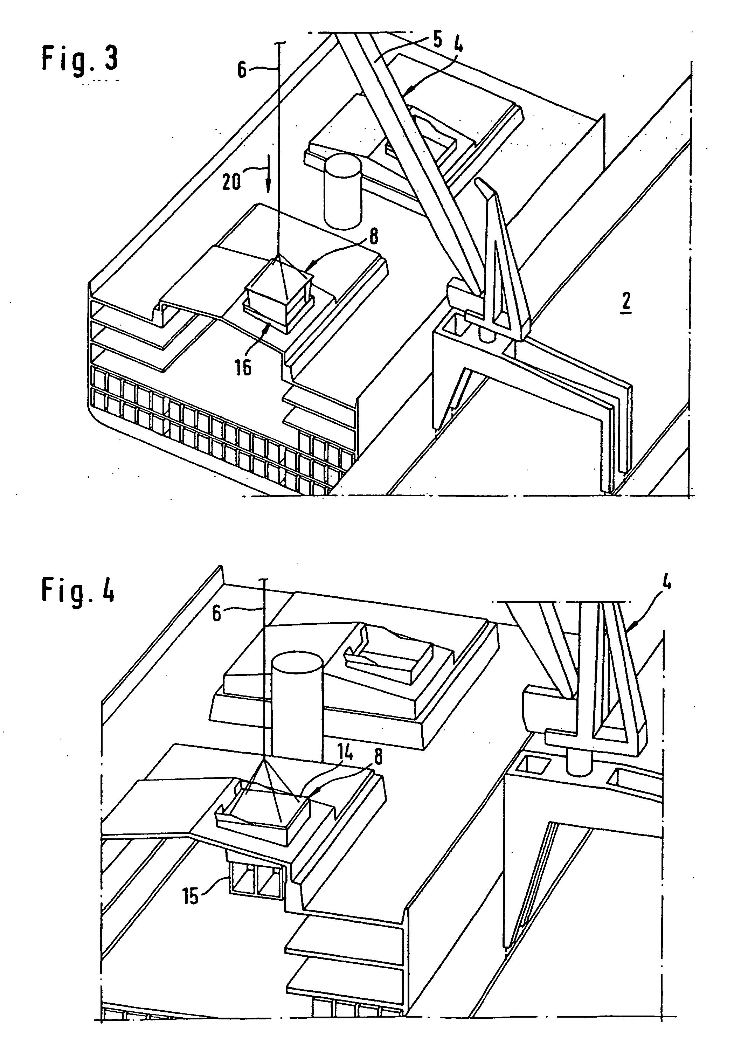

Fig. 3 zeigt einen Zwischenzustand, in dem der untere Abschnitt der Umschlageinheit 8 sich bereits durch die Abdeckung 17 hindurch nach unten in den Laderaum 3 erstreckt, während der obere Abschnitt der Umschlageinheit 8 noch über die Oberkante der Ladeluke 16 nach oben vorsteht.

Da die Umschlageinheiten 8 jeweils pendelnd am Ausleger 5 des Pier-Krans 4 angeschlagen sind, und das i.a. relativ biegeweiche Kranseil 6 nicht verhindern kann, daß es beim Verschwenken einer Umschlageinheit 8 aufgrund der hierbei auftretenden Beschleunigung bzw. aufgrund der Massenträgheit der Kranlast 8, sowie nicht zuletzt aufgrund von Seitenwind zu einem pendelnden Schwingen der Last 8 um den Auslegerkopf kommt, und im übrigen auch selbst ohne diese erschwerenden Einflüsse eine genaue, zentrische Positionierung einer Umschlageinheit 8 über der Ladeluke 16 bzw. der diese überdeckenden Abdeckung 17 durch den Kranführer ohne entsprechende Hilfsmittel außerordentlich schwierig bzw. unmöglich ist, und man schon aus Kostengründen auf einen an der Ladeluke 16 zu positionierenden Warschaumann möglichst verzichten will, sind entsprechende Positionier- bzw. Zentriermittel vorgesehen, die dem Kranführer ein müheloses selbsttätig zentriertes Einfahren einer Umschlageinheit 8 in die Ladeluke 16 ohne weiteres ermöglichen.

Hierfür können bspw. sich nach oben erweiternde, trichterförmige Leitbleche od.dgl. auf der Oberseite der Ladeluke 16 bzw. der diese beim Umschlag überdeckenden Abdeckung 17 vorgesehen sein (s. Fig. 26 bzw. Fig. 14, 21, 22, 27, 29, 30, 33a, 34 und 35), oder/und aber auch - wie bei dem Ausführungsbeispiel gem. den Fig. 1 - 11 - andere Positionier- bzw. Zentriermittel.

Bei dem in den Fig. 1 - 11 (schematisch) dargestellten, hier zunächst beschriebenen Ausführungsbeispiel ist eine im einzelnen nicht dargestellte Steuereinrichtung vorgesehen, mittels welcher jeweils eine von oben her in die Ladeluke 16 einzufahrende Umschlageinheit 8 bei ihrem Absenken über der/in die Ladeluke 16 selbsttätig zentrisch zur Ladeluke 16 bzw. einer zuvor auf dieser positionierten Abdeckung 17 anzuordnen ist. Hierfür ist bei dem Ausführungsbeispiel an jeder Ladeluke 16 ein in der Zeichnung nicht dargestellter Leitstrahl-Emitter angeordnet, der - ähnlich einem Orientierungs-Leitstrahl auf Flughäfen, der bei der Landung eines Flugzeuges als Orientierungshilfe verwendet wird - bspw. aus einem Laserstrahl od.dgl. bestehen kann. Darüber hinaus sind die Umschlageinheiten 8 jeweils mit wenigstens einem Sensor (vorzugsweisen mehreren Sensoren) versehen, der den jeweiligen Ist-Abstand der Umschlageinheit 8 bzw. des jeweiligen Sensors zum Leitstrahl feststellt, und ein entsprechendes Signal zu einer ebenfalls in der Zeichnung nicht dargestellten Steuereinrichtung übermittelt, in/mittels welcher dieser Ist-Wert mit einem vorgegebenen Soll-Wert verglichen wird, und von welcher bei einem Abweichen des Ist-Wertes vom jeweiligen Soll-Wert ein Steuersignal für eine Gegenmaßnahme eingeleitet wird, mittels welcher die Ist-Wert/Soll-Wert-Abweichung kurzfristig i.w. auf Null (zumindest auf einen unschädlichen bzw. unproblematischen Wert) zu reduzieren ist.

Eine solche Gegenmaßnahme kann ersichtlich auf vielfältige unterschiedliche Weise erfolgen, nämlich bspw. durch Verschwenken bzw. Verfahren des Auslegers. Da dieses aber wiederum mit der Einprägung einer weiteren Pendelbewegung bzw. Verstärkung der vorhandenen Pendelbewegung der Kranlast verbunden sein kann, hat es sich als besonders zweckmäßig herausgestellt, eine solche Gegenmaßnahme möglichst lastnah vorzusehen und durchzuführen, also bspw. mittels einer "Seilbremse" od.dgl., besonders einfach durch wenigstens zum Teil bewegliche Anschläge, die am zweckmäßigsten relativ kurz oberhalb der Anschlagstelle selbsttätig gesteuert an das Kranseil 6 heranzufahren sind, wobei diese grundsätzlich eine Zusatzeinrichtung des Pier-Krans 4 sein können, es sich aber gezeigt hat, daß es (erheblich) zweckmäßiger ist, wenn eine derartige "Seilbremse" od.dgl. im Bereich einer/jeder Ladeluke 16 montiert ist, da man dann "schiffsautark" und nicht auf die jeweilige Ausrüstung der jeweiligen Hafen-Umschlaganlage angewiesen ist.

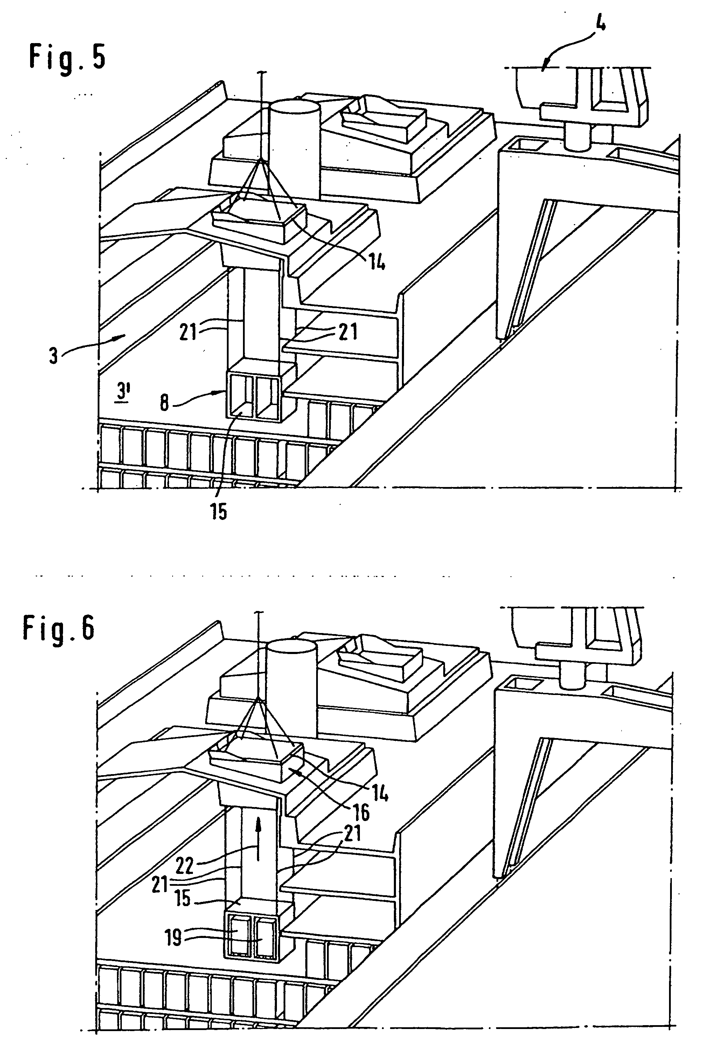

Sobald der Kranführer eine Umschlageinheit 8 in die Abdeckung 17 einer offenen Ladeluke 16 eingefahren und aus der Zwischenstellung gem. Fig. 3 in die Stellung gem. Fig. 4 abgesenkt hat, wobei die Abdeckung 17 - ebenfalls selbsttätig - soweit geöffnet wird, daß der Umschlagkorb 15 durch sie nach unten hindurchtreten kann, und die Ladeluke 16 nunmehr mithin durch die Umschlaghaube 14 nach oben/außen regendicht verschlossen ist, wird der (noch leere) Umschlagkorb 15 der Umschlageinheit 8, der über vier Seile 21 mit der Umschlaghaube 14 verbunden ist - welche Bestandteil eines Windensystems der Umschlageinheit 18 sind, das ersichtlich von dem Pier-Kran 4 unabhängig (zu betätigen) ist - nach unten abgesenkt, im vorliegenden Falle bis auf den Boden 3' des Laderaums 3, um dort mit vier Fruchtpaletten 19 beladen zu werden (s. Fig. 6).

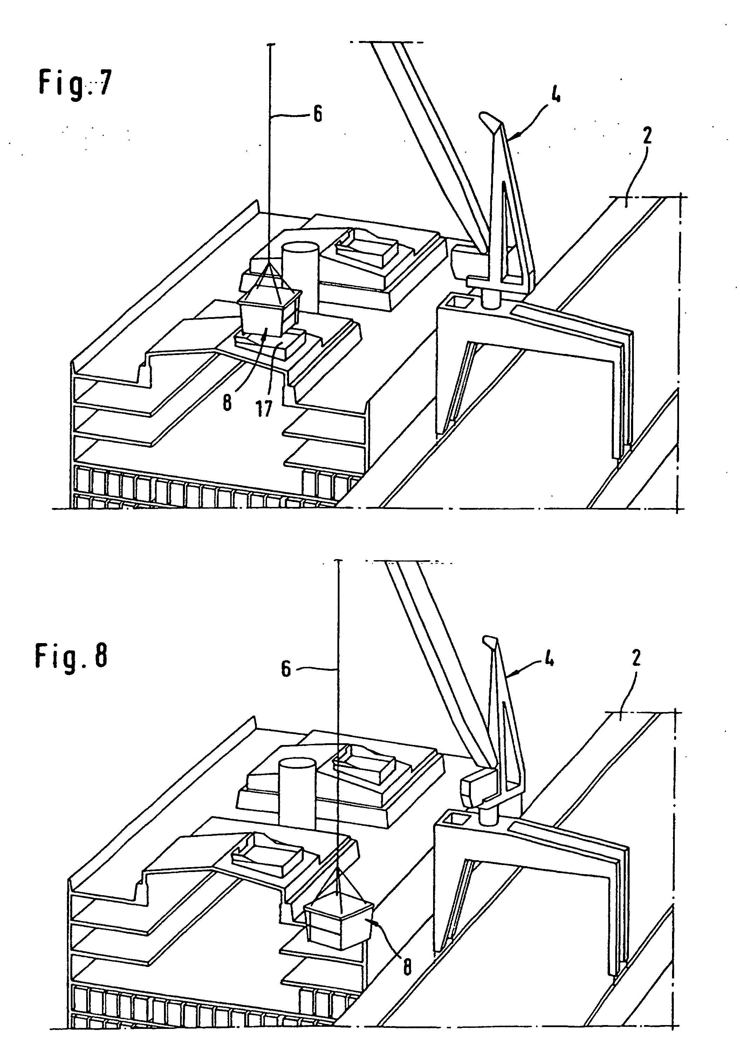

Der (mit vier Fruchtpaletten 19) beladene Umschlagkorb 15 wird sodann wieder (in Richtung des Pfeiles 22) mittels der Seile 21 bzw. des oben erwähnten Windensystems nach oben in die Umschlaghaube 14 gehievt, und die nunmehr beladene Umschlageinheit 8 wird danach von dem Pier-Kran 4 angehoben (s. Fig. 7). Sobald sich der unterste Abschnitt der Umschlageinheit 8 bis über die Abdeckung 17 der Ladeluke 16 bewegt hat, schließt sich die Abdeckung 17 wieder selbsttätig und bildet ihrerseits nunmehr wiederum einen Schutz des Laderaums gegen Niederschläge, Flugsand u.dgl..

An dieser Stelle sei kurz erläutert, wie/wodurch die Abdeckung(en) 17 dieses bewirken kann (können). Hierzu wird auf die Fig. 12 und 13 verwiesen, die ebenfalls stark schematisiert sind, jedoch das Prinzip der erfindungsgemäßen Abdeckung(en) beispielhaft grundsätzlich ohne weiteres erkennen lassen:

Wenn es sich bei den Umschlageinheiten 8 um i.w. zylindrische Gebilde (zur Aufnahme von entsprechendem Frachtgut) handelt, kann das Abdeckmittel 18 jeder Abdeckung 17 i.w. etwa wie eine Blende einer Kamera ausgebildet sein, wobei die Blendensegmente mittels geeigneter Geber zu steuern sind, die eine Annäherung einer Umschlageinheit 8 signalisieren, und hierdurch in der Steuereinrichtung entsprechende Steuersignale auslösen, welche ein Öffnen der Blendensegmente bewirken, und zwar soweit, daß die betreffende Umschlageinheit 8 in die Abdeckung 17einzufahren ist. Danach sorgt ein weiteres Steuersignal dafür, daß die Blendenelemente während des Be- bzw. Entladevorgangs dichtend an die Außenseite der Umschlageinheit 8 herangefahren werden.

Wenn es sich dagegen - wie im vorliegenden Falle - um in der Draufsicht rechtwinklige Umschlageinheiten 8 handelt, ist eine derartige oder ähnliche Ausbildung aus ohne weiteres erkennbaren Gründen weniger zweckmäßig, sondern vielmehr z.B. folgende (s. Fig. 12, 13):

Die Abdeckungen 17 weisen jeweils einen Rahmen 23 auf, der beim Absetzen der Abdeckung 17 auf eine geöffnete Ladeluke 16 formschlüssig mit der Ladeluke 16 zu verbinden bzw. zu verriegeln ist. Der Rahmen 23 umgibt das (eigentliche) Abdeckmittel 18, welches die Ladelukenöffnuug vollständig regendicht verschließt, wenn keine Umschlageinheit 8 in die Ladeluke 16 eingefahren ist, diese also durch eine Umschlaghaube 14 verschlossen ist, um einerseits auch dann den Laderaum 3 des Schiffes 1 vor dem Eindringen von Niederschlägen, Flugsand u.dgl. zu bewahren, andererseits aber auch dennoch einen möglichst raschen Ent- bzw. Beladevorgang durchführen zu können, also u.a. auch eine Umschlageinheit 8 (und zwar mittels des Pier-Krans 4 von dessen Kranführer aus) ohne unnötige Totzeiten in eine von einer Abdeckung 17 abgedeckten Ladeluke 16 einfahren zu können.

Das Abdeckmittel 18 besteht bei dem in den Fig. 12 und 13 schematisch dargestellten Ausführungsbeispiel aus einer Art Lamellenplatte, deren einzelne Lamellen 24 jeweils mit den beiden seitlich benachbarten Lamellen 24 in der Art einer (querflexiblen) Nut-Feder-Verbindung (regendicht) miteinander verbunden sind, und zwar so, daß jeweils zwei einander benachbarte Lamellen 24 in ihrer Längsrichtung relativ zueinander beweglich/verschiebbar sind.

Wie insb. aus Fig. 12 erkennbar ist, ist die von dem Abdeckmittel 18 überdeckte Fläche i.w. diagonal geteilt, wobei die im Abdeckungsfeld 17' angeordneten Lamellen 24 in Fig 12 von vertikalen Linien und die im Abdeckfeld 17" befindlichen Lamellen 24 durch horizontale Linien begrenzt sind.

Die Lamellen 24 sind jeweils an ihrer den Lamellen 24 des anderen Abdeckungsfeldes zugekehrten Stirnseite mit einer Dichtung 25 versehen, die im verschlossenen Zustand der Abdekkung 17 bzw. ihres Abdeckmittels 18 dichtend an einer Seitenfläche einer Lamelle 24 des anderen Abdeckungsfeldes anliegt (Fig. 12).

Soll eine Umschlageinheit 8 mittels des Pier-Krans 4 von oben her in eine Ladeluke 16 eingefahren werden, so wird - sobald die Umschlageinheit 8 zentrisch über der Ladeluke 16 positioniert und dieser angenähert ist - das Abdeckmittel 18 der Abdeckung 17 soweit aufgefahren, wie dieses zur Aufnahme der Umschlageinheit 8 erforderlich ist, d.h. die Lamellen 24 werden aus ihrer in Fig. 12 erkennbaren (vollständigen) Schließstellung soweit erforderlich jeweils in ihrer Längsrichtung gem. den Pfeilen 26 bzw. 26' nach außen gefahren, bis die von ihnen freigegebene Öffnung ausreichend groß ist, um die Umschlageinheit 8 von oben her in die Öffnung einfahren zu können.

Sobald die Umschlageinheit 8 in der Ladeluke 16 entsprechend positioniert ist (s. Fig. 4), werden die zuvor am Öffnungsvorgang beteiligten Lamellen 24 jeweils entgegen den Pfeilen 26 bzw. 26' soweit nach innen gefahren, daß sie unter dichtendem Andruck ihrer Dichtungen 25 an der Außenseite der Umschlageinheit 8 bzw. deren Umschlaghaube 14 anliegen (s. Fig. 13), mit der Folge, daß die Ladeluke 16 erneut/weiterhin regendicht verschlossen ist, während die Be- bzw. Entladung des Umschlagkorbes 15 im Laderaum 3 des Schiffes 1 stattfindet.

Dabei sei noch nachgetragen, daß auch der Rahmen 23 an der Innenseite wenigstens zweier rechtwinklig zueinander verlaufender Schenkel derartige Dichtungen 25' aufweist, so daß eine in der Ladeluke 16 positionierte Umschlageinheit 8 umlaufend an ihrem Umfang abgedichtet ist, und im übrigen innerhalb der umlaufenden Dichtungen 25, 25' mit der Dachfläche 36' der Umschlaghaube 14.

Wie insb. aus Fig. 13 ohne weiteres erkennbar ist, läßt sich die vorstehend bereits geschilderte Arbeitsweise ggf. auch bei einer Umschlageinheit 8' mit anderer Breite und/oder Tiefe ohne weiteres praktizieren. Die in Fig. 13 mit punktierten Linien eingezeichnete Umschlageinheit 8', die gegenüber der Umschlageinheit 8 eine geringere Breite und eine geringere Tiefe hat, erfordert es ersichtlich lediglich, die Lamellen 24 nach dem Öffnen des Abdeckmittels 18 (soweit sie an dem der Außenkontur der Umschlageinheit 8 gesteuert angepaßten Öffnungsvorgang beteiligt waren) etwas weiter von innen an die Außenkontur der Umschlageinheit 8' bzw. deren Umschlaghaube 14 heranzufahren.

Nach diesen Zwischenbemerkungen zur Abdeckung 17 bzw. deren Abdeckmittel 18 unter Bezugnahme auf die Fig. 12 und 13 der Zeichnung wird der Schiffs-Entladevorgang nunmehr weiter und abschließend beschrieben:

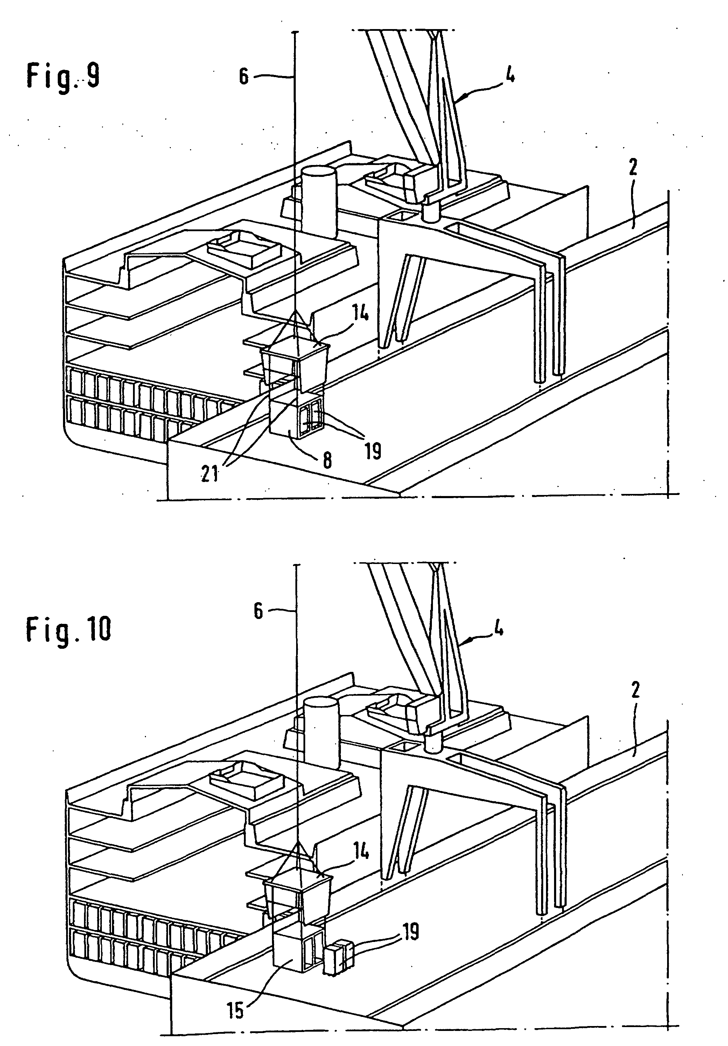

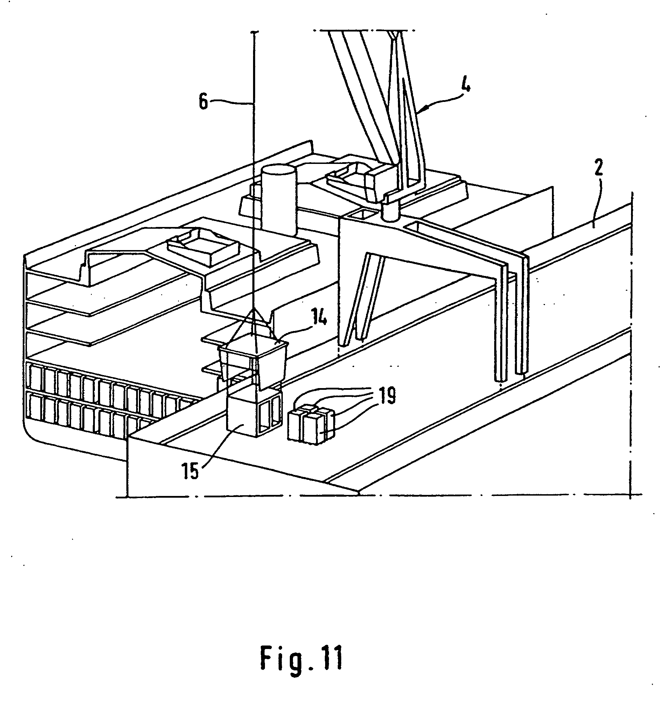

Wenn der Führer des Pier-Krans 4 die beladene Umschlageinheit 8 in die in Fig. 7 erkennbare Zwischenposition angehoben hat, hat sich das Abdeckmittel 18 bereits wieder durch entsprechende Steuerung selbsttätig geschlossen (Fig. 12), so daß auch nach dem Herausfahren der Umschlageinheit 8 aus der Ladeluke 16 keine nennenswerten Niederschläge oder Verunreinigungen in den Laderaum 3 des Schiffes 1 von außen eindringen können. Der Kranführer schwenkt die beladene Umschlageinheit 8 über die Zwischenstellung gem. Fig. 8 über die Pier 2, und senkt dort sodann den Umschlagkorb 8 mittels der oben beschriebenen Windenanordnung relativ zur Umschlaghaube 14 soweit ab, daß er auf der Pier 2 aufsteht (Fig. 9), und die vier Fruchtpaletten 19 einzeln nacheinander, paarweise oder gleichzeitig aus dem Umschlagkorb 15 entladen werden können. Fig. 10 zeigt diesen Zustand mit zwei dem Umschlagkorb 15 entnommenen Fruchtpaletten 19, und Fig. 11 mit vier entnommenen, nebeneinander an der vorgesehen Lagerstelle abgestellten Fruchtpaletten 19.

Danach zieht der Kranführer den Umschlagkorb 15 wiederum mittels der Windenanordnung in die Umschlaghaube 14 hoch (s. auch Fig. 2), und verschwenkt die Umschlageinheit 8 erneut bis über die Ladeluke 16, wo sie selbsttätig zentriert und sodann in die Ladeluke 16 (unter gleichzeitiger selbständiger Teilöffnung des Abdeckmittels 18 der Abdeckung 17) abgesenkt wird (Fig. 3), bis der Zustand gem. Fig. 4 wiederum erreicht worden ist, und der Umschlagkorb 15 wiederum mit vier Fruchtpaletten 19 beladen werden kann.

Falls das Schiff 1 keine Leerfahrt zu einem anderen Hafen macht, kann zur Abkürzung des Ent- und Beladens natürlich ggf. das leere Zurückschwenken der Umschlageinheit 8 vom Pier 2 in die Ladeluke 16 dadurch vermieden werden, daß dabei bereits neues/anderes Ladegut an der Pier 2 aufgenommen und beim Zurückschwenken der Ladeeinheit 8 in die Aufnahmeluke 16 letztlich in dem/den Laderaum des Schiffes 1 gestaut oder ggf. auf dem Schiff zwischengelagert wird.

Während vorstehend anhand der stark schematisierten Fig. 1 - 13, insb. der Fig. 1 - 11, das Prinzip des erfindungsgemäßen Umschlagverfahrens sowie die hierfür bestimmte und geeignete Einrichtung grundsätzlich beschrieben worden sind, da dieses regelmäßig einem einfachen, raschen Verständnis förderlich ist, wird nachfolgend nunmehr anhand der Fig. 14 ff. auf konkretere Ausführungsbeispiele insb. für die Umschlageinheiten 8, d. h. also die Umschlaghaube 14 sowie den Umschlagkorb 15, die Abdeckung 17 und eine landseitige Entladung abgestellt, bei welcher ja - anders als bei einem Schiff oder einem sonstigen mit einer Be- bzw. Entladeöffnung (Ladeluke) 16 versehenen Laderaum 3 - keine Be- bzw. Entladeöffnung 16 vorhanden ist, an welcher die Umschlaghaube 14 einer Ladeeinheit 8 jeweils oberhalb der Lager- bzw. Transportfläche zu halten ist, wenn der Umschlagkorb 15 relativ zur Umschlaghaube abgesenkt werden soll, ohne daß die Umschlageinheit 8 mit einem gesonderten, eignen Antrieb versehen ist.

Fig. 14 zeigt zunächst einmal eine Fig. 1 bzw. Fig. 4 ähnliche Darstellung mit einer Umschlageinheit 8, wie sie später anhand der Fig. 15 - 20 sowie 31, 32 im einzelnen erläutert wird, und weiterhin mit dem Unterschied, daß die in Fig. 14 erkennbare Ladeluke 16 des im Ausschnitt dargestellten Frachtschiffes 1 von zwei Pier-Kranen 4 bedient wird. Auch die Abdeckung 17 unterscheidet sich erheblich von der weiter oben beispielhaft anhand der Fig. 12 und 13 erläuterten. Sie wird weiter unten insb. unter Bezugnahme auf die Fig. 21 - 28 sowie 30 und 33 - 35 im einzelnen erörtert. Fig. 14 zeigt mithin einen Be- bzw. Entladezustand, bei dem eine Umschlageinheit 8 auf eine von einer Abdeckung 17 abgedeckte Ladeluke 16 eines Frachtschiffes 1 dichtend aufgesetzt ist. Die (schiffseigene) Ladeluken-Abdeckung 27 im rechten Teil der Ladeluke 16 ist zur Hälfte geöffnet, wobei der der Umschlaghaube 14 zugeordnete Umschlagkorb 15 sich noch innerhalb der Umschlaghaube 14 befindet, also noch nicht auf das entsprechende Schiffsdeck abgesenkt ist.

Eine weitere Umscblageinheit 8' ist an den rechts in Fig. 14 dargestellten zweiten Pier-Kran 4' angeschlagen. Ihr (noch leerer) Umschlagkorb 15' ist relativ zu ihrer Umschlaghaube 14' nach unten abgesenkt.

Fig. 15 zeigt einen i.w. konventionellen Umschlagkorb 15 zur Aufnahme von vier Fruchtpaletten 19, die in Fig. 15 mit strichpunktierten Linien schematisch angedeutet sind. An ihrer Unterseite befindet sich jeweils eine Flachpalette 19', so daß die Fruchtpaletten 19 jeweils mittels eines Hubgerätes wie eines Gabelstaplers, Hubwagens od.dgl. in die beiden einander gegenüberliegenden, offenen Seiten eines Umschlagkorbes 15 einzufahren, und auf ihrem Boden 28 so abzusetzen sind, daß sie nicht über die Außenkontur des Korbrahmens 29 nach außen vorstehen.

Der in Fig. 15 dargestellte Umschlagkorb 15 ist gegenüber konventionellen Umschlagkörben i.w. nur hinsichtlich seiner vier Aufhängepunkte 30 modifiziert. Um dieses zu erläutern und zu verdeutlichen, ist die in Fig. 15 mit einem strichpunktierten Kreis eingerahmte und mit XVI bezeichnete obere rechte Ecke in Fig. 16 vergrößert dargestellt. Es ist erkennbar, daß auf der mit einer Platte 31 abgedeckten Oberseite dieses sog. 4er-Palettenkorbes 15 jeweils eine hochstehende Lasche 32 angeschweißt ist, die jeweils mit einer horizontalen Durchgangsbohrung 33 versehen ist, so daß der Palettenkorb 15 an den vier Eckpunkten seiner Oberseite angeschlagen werden kann. Die Eigenmasse eines solchen 4er-Palettenkorbes beträgt ca. 1,3 t, seine Nutzlast etwa 4,4 t.

Aufgrund seiner Vier-Punkt-Aufhängung kann der Umschlagkorb 15 gem. den Fig. 15 und 16 nach dem Aufsetzen der ihm zugeordneten Umschlaghaube 14 auf den (weiter unten noch im einzelnen beschriebenen) Rahmen 23 an der Ladeluke 16 nicht mehr verdreht werden. Da dieses für den Be- und Entladevorgang nachteilig ist, wird bei dem erfindungsgemäßen Verfahren bevorzugt der in Fig. 17 dargestellte Umschlagkorb 15" eingesetzt, der statt einer Vier-Punkt-Aufhängung zentrisch anschlagbar und um seine Längsmittelachse 34 drehbar ist. Um dabei das seitliche Ausschlagen und/oder ein Drehen um die Achse 34 des in die Be- bzw. Entladeöffnung 16 eingefahrenen Umschlagkorbes 15" in geringen Grenzen zu halten, ist der Anschlagstutzen 35 des Umschlagkorbes 15" mit einer Pendeldämpfung versehen.

Fig. 18 zeigt beispielhaft die Ausbildung eines Teils einer Umschlaghaube 14, und zwar deren äußere Plane 36, die auf den i.w. quaderförmigen, sich nach unten konisch erweiternden Rahmen 29 (s. Fig. 19) der Umschlaghaube 14 aufgesetzt wird, um dessen Oberseite und Seitenflächen während des Transports durch den Kran 4 bzw. 4' vor Witterungseinflüssen und Verschmutzung zu schützen. Der Rahmen 29 schließt unten mit einem Ring 29' ab, so daß die Plane entsprechend ausgebildet ist, also von ihrer rechteckigen Oberseite 36' aus - sich nach unten erweiternd - letztlich in einen ringförmigen Abschnitt übergeht.

Die im Bereich des Haubendaches 37 angeordneten, am Rahmen 29 befestigten Seilrollen 38 erstrecken sich durch angepaßte Ausschnitte in der Oberseite 36' der Plane 36 teilweise nach oben hindurch. Sie lenken ein Seil 39 so um, daß der Umschlagkorb 15 senkrecht und zentrisch unter der Umschlaghaube 14 hängt.

Fig. 20 zeigt eine Umschlaghaube 14" für einen drehbaren Umschlagkorb 15" (s. z.B. Fig. 17). Da letzterer einen rechtwinkligen Querschnitt aufweist, muß der freie Querschnitt der Umschlaghaube 14" ersichtlich kreisförmig, der von ihr umfaßte Raum also im Bereich des Umschlagkorbes 15" zylindrisch sein. Dabei ist das Haubendach 37 - und damit selbstverständlich auch der dortige Abschnitt der Plane 36 - i.w. trichterförmig ausgebildet, damit auch die vom Haubendach hochstehende Teile (z.B. 35 bzw. 38) geschützt zu überspannen sind.

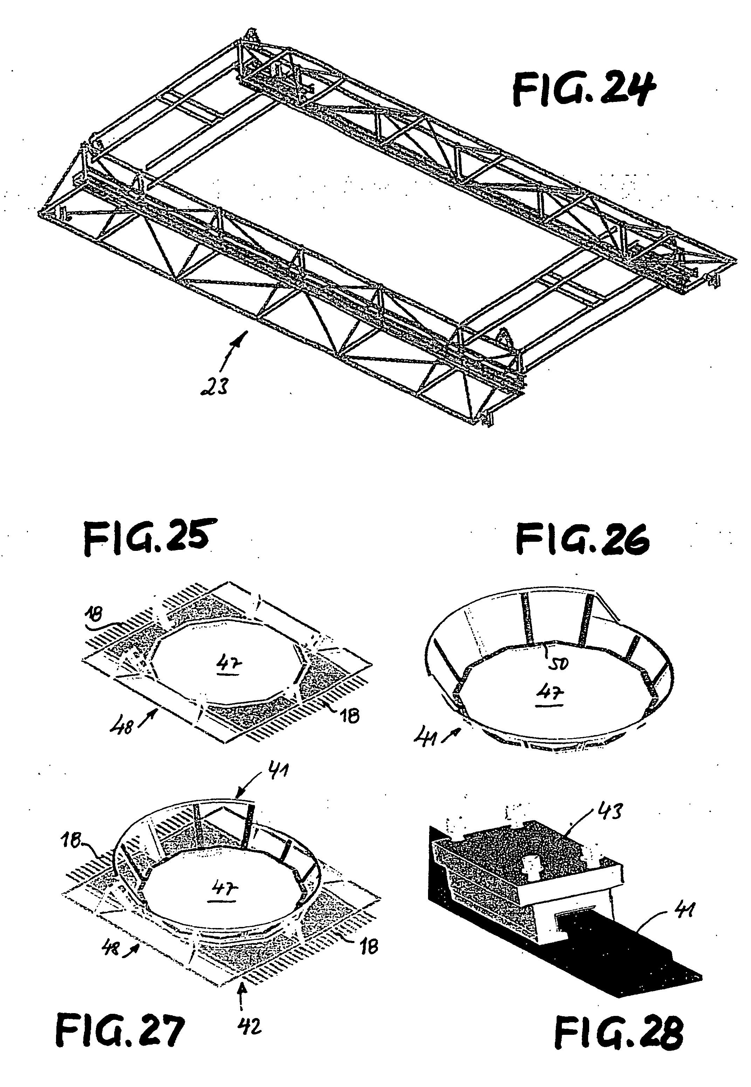

Fig. 21 zeigt einen eine Ladeluke 16 enthaltenden Ausschnitt eines Frachtschiffes 1, wie auch bereits in Fig. 14 erkennbar ist, in gegenüber Fig. 14 vergrößertem Maßstab, und ohne bereits aufgesetzte Ladeeinheit 8. Die Einzelheiten hierzu sind in den nachfolgenden Fig. 22 bis 28 dargestellt. Die insgesamt mit 17 bezeichnete Abdeckung der Ladeluke 16 umfaßt zunächst einmal einen oben im Zusammenhang mit den Fig. 1 bis 13, insb. den Fig. 12 und 13, angesprochenen (Grund-)Rahmen 23 (s.a. Fig. 24), der nach dem Öffnen der schiffseigenen Ladeluken-Abdeckung 27 (in Fig. 21 bereits geöffnet) auf die Ladeluke 16 aufgesetzt wird, und an seiner Oberseite zwei mit Abstand zueinander angeordnete, parallele Gleitschienen 40, 40 aufweist, auf denen ein Schlitten 42 (s.a. Fig. 27) mit einem sich von oben nach unten verjüngenden Einweistrichter 41 (s.a. Fig. 26) gleitbar verschiebbar ist, und zwar mittels Gleitschuhen 43, von denen in Fig. 28 einer dargestellt ist.

Außerdem weist die Abdeckung 17 als Abdeckmittel 18 Gleitelemente 18' auf (s.a. Fig. 23), die i.w. aus Trapezblechen 44 bestehen, welche auf einem Abdeckrahmen 45 angeordnet sind, um eine Wetterschutz-Abdeckung für den jeweils neben dem Einweistrichter 41 liegenden Abschnitt der Ladeluke 16 zu bilden. Jedes Gleitelement 18' wird nach dem sog. Schubladenprinzip durch Rollen 46 in einem Führungsprofil geführt, und jeweils zusammen mit dem Schlitten 42 verfahren. Dabei sind die Trapezbleche 44 um ca. 3° quer zum Schiff geneigt, um einen Abfluß von Regenwasser zu gewährleisten.

Fig. 24 zeigt in einer Einzeldarstellung den bereits wiederholt erwähnten Rahmen 23, auf dem der Schlitten 42 (s. Fig. 27) gleitbar zu verfahren ist, und zwar mittels eines im einzelnen nicht dargestellten elektrischen Schlitten-Antriebes. Dabei ist mithin der in Fig. 26 isoliert dargestellte korbförmige Einweiser 41, der beim Aufsetzen einer Ladeeinheit 8 diese zur Einführöffnung 47 hin zentriert, auf eine Plattform 48 aufgesetzt, die zusammen mit dem Einweistrichter 41 den Schlitten 42 bildet, welcher wiederum auf den (Grund-)Rahmen 23 aufgesetzt ist, und (nur) einen Teil der Ladeluke überdeckt. Der (die) jeweils nicht von dem Schlitten 42 überdeckte(n) Abschnitt(e) der Be- bzw. Entladeöffnung (Ladeluke) 16 ist (sind) jeweils von den Abdeckmitteln 18 der Abdeckung 17 regendicht überdeckt, bei dem vorliegenden Ausführungsbeispiel also von den gleichsam teleskopierbaren Gleitelementen 18'. Diese sind im rechten Teil von Fig. 21 einander weitgehend überlappend zusammengefahren, und im linken Teil von Fig. 21 einander erheblich weniger überlappend weitgehend auseinandergefahren, so daß der geöffnete Teil der Ladeluke 16 völlig überdeckt ist, wenn eine Umschlageinheit 8 auf die Einführöffnung 47 des Einweistrichters 41 bzw. Schlittens 42 aufgesetzt ist.

Es sei noch darauf verwiesen, daß in Fig. 21 der Schlitten 42 sowie die Gleitelemente 18' jeweils etwa nur zur Hälfte dargestellt sind, um die darunter befindlichen Fruchtpaletten 19 besser verdeutlichen zu können. Tatsächlich wird der geöffnete Teil der Ladeluke - wie ausgeführt - natürlich insgesamt überdeckt. Die vollständige Abdeckung 17 ist in Fig. 22 (gegenüber Fig. 21 etwas kleiner) dargestellt.

Der Funktionsablauf ist i.w. so, wie er unter Bezugnahme auf die Fig. 1 - 13 weiter oben bereits grundsätzlich beschrieben worden ist: Nach dem Anlegen des Frachtschiffes 1 werden zunächst die landseitig sowie auf dem Lukendeckel 27 stehenden Kühlcontainer 49 mittels einer Containerbrücke von Bord genommen und an Land (ggf. zwischen-)gestaut. Sodann wird die schiffseigene Ladeluken-Abdeckung 27 ganz oder bzw. zur Hälfte geöffnet, wie dieses in den Fig. 14, 21, 30, 34 und 35 erkennbar ist, und es werden sodann zunächst die im (obersten) A-Deck gestauten sog. Schlüsselpaletten (Key-Pallets) gelöscht. Hierbei handelt es sich um diejenigen Fruchtpaletten 19" (s.a. Fig. 33), die fluchtend unterhalb der Einführöffnung 47 angeordnet sind. Die Schlüsselpaletten 19" werden jeweils angeschlagen und mittels des zum Einsatz kommenden Krans 4 bzw. 4' (oder auch eines bordeigenen Krans) entladen, um zunächst einmal Platz bzw. Raum für einen in den Laderaum 3 absenkbaren Umschlagkorb 15 bzw. 15' bzw. 15" zu schaffen, sowie auch für Hubwagen, mittels welcher die weiteren Fruchtpaletten jeweils in einen eingefahrenen Umschlagkorb 15 einzubringen sind.

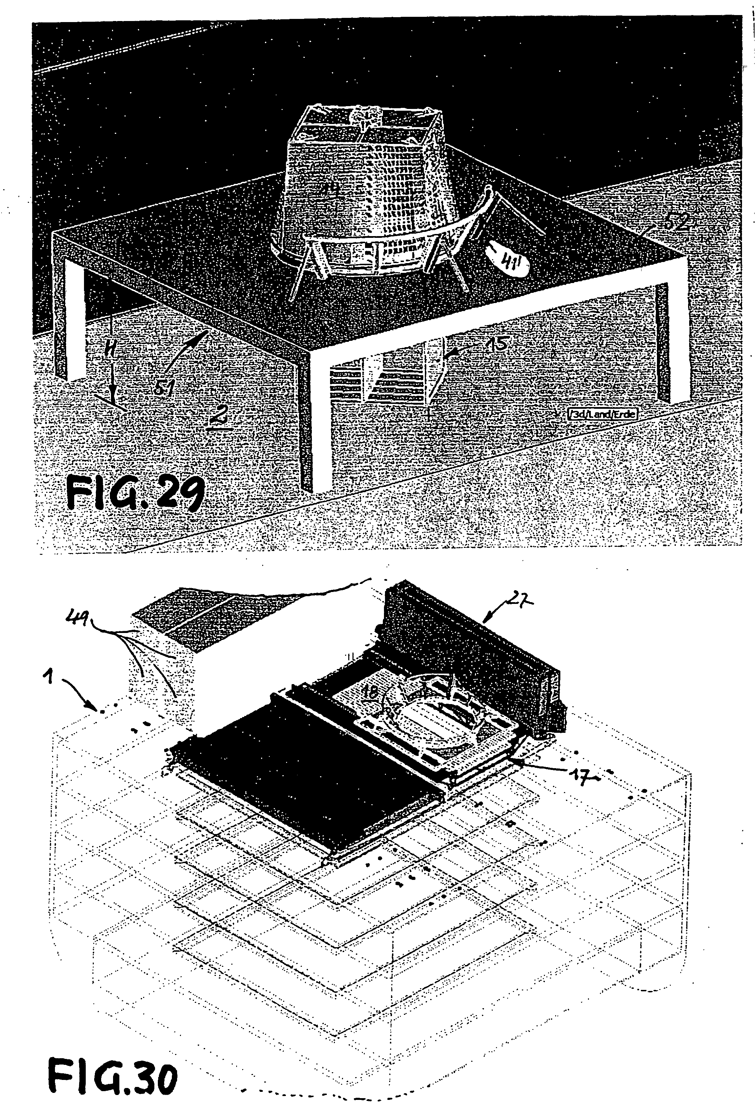

Sobald dieses geschehen ist, kann die Abdeckung 17 mittels eines der vorhandenen Pier-Krane 4, 4' oder ggf. auch mittels eines bordeigenen Krans auf den geöffneten Bereich der Luke 16 abgesetzt und dort verriegelt werden. Diesen Zustand zeigt bspw. Fig. 30.

Ergänzend zu den vorstehenden Ausführungen sei noch darauf verwiesen, daß ab dem (zweitobersten) B-Deck durch die zur Hälfte geöffnete Lukenabdeckung insgesamt ca. 20 Schlüsselpaletten 19' entnommen werden können, und zwar i. d. R. 3 x 4 Schlüsselpaletten 19" mit direktem Vertikalzug nach oben, und i.a. 2 x 4 Schlüsselpaletten 19" mit leichtem Schrägzug. Diese Hinweise betreffen diejenigen Paletten, die in Fig. 33 grau bzw. hell dargestellt sind, während die daneben befindlichen Fruchtpaletten 19 von oben her nicht mehr erreicht werden.

Bei dem vorliegenden Ausführungsbeispiel wird die Ladung aus einer Luke 16 sodann mit zwei Pier-Kranen 4, 4' gelöscht (s. Fig. 34). Dabei wird jeweils eine aus einem Umschlagkorb 15 und einer Umschlaghaube 14 bestehende Umschlageinheit 8 zur Abdeckung 17 geschwenkt. Ist diese erreicht, so ist für ihr Einfädeln für die von dem Einweistrichter 41 umgebene Einführöffnung 47 folgendes vorgesehen:

Der Kranführer fährt die Umschlageinheit 8 auf eine Anfahrhöhe innerhalb der Höhendifferenz zwischen wasserseitigem Einweistrichter 41 und landseitigem Einweistrichter 41' (s. Fig. 29). Hierdurch wird gewährleistet, daß die Umschlaghaube 14 der betreffenden Umschlageinheit 8 an den wasserseitigen Einweistrichter 41 anschlägt und sicher in ihn abgesenkt werden kann. Der Umschlagkorb 15 kann dabei ersichtlich ggf. extrem von der idealen Lage zum Einfädeln abweichen, ohne hierdurch ein sicheres Einweisen zu gefährden.

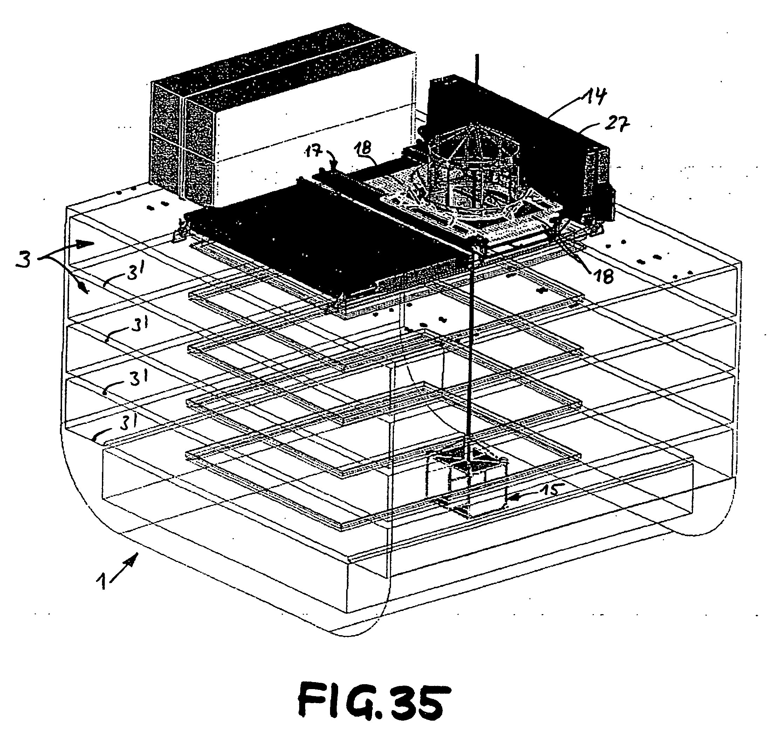

Der Einweistrichter 41 bzw. 41' weist einen Rezeß 50 auf, auf dem die Umschlaghaube 14 beim weiteren Absenken des Kranseils 6 stehen bleibt, während der Umschlagkorb 15 weiter abgesenkt wird, und zwar auf das jeweils zu bearbeitende (hier: zu entleerende) Arbeitsdeck, wie dieses beispielhaft in Fig. 34 und 35 erkennbar ist.

Der Umschlagkorb 14 wird sodann mit Hilfe von Gabelhubwagen mit vier Fruchtpaletten 19 beladen, die an seinen beiden offenen Seiten in den Umschlagkorb 15 eingefahren und sodann abgesetzt werden. Sodann wird der beladene Umschlagkorb 15 in die ihm zugeordnete Umschlaghaube 14 hineingehoben, die - wie ausgeführt - auf dem Rezeß 50 des Einweistrichters 41 geparkt ist, und die Umschlageinheit wird über das Kranseil 6 von dem im Einsatz befindlichen Pier-Kran 4 bzw. 4' zur Landseite transportiert und auf der Pier 2 abgesetzt. Dort können die Fruchtpaletten 19 beispielsweise durch einen Gabelstapler mit Doppelgabel entnommen und zwischengelagert oder sogleich auf eine Fördereinrichtung oder auf Kühl-Lkws, Eisenbahn-Kühlwagen od.dgl. übernommen werden. In einem solchen Fall ist es zur Erzielung eines i.w. geschlossenen, stetigen "Stückgutstranges" auf dem Abförderer zweckmäßig, diesen in der Art eines Taktförderers auszubilden bzw. zu steuern, also i.w. so, daß der zu beladende Förderstrang jeweils (nur) um gut die Länge einer Fruchtpalette 19 weiterrückt, wenn eine Fruchtpalette 19 (oder ggf. zwei oder mehr in Querrichtung des Förderers parallel nebeneinander) auf dem Fördertrum abgesetzt ist, wobei diese Taktsteuerung ggf. vom Kran 4 bzw. 4' aus oder auch automatisch (durch entsprechende Geber, wie z.B. Lichtschranken oder gewichtssensible Geber gesteuert) erhalten kann.

Es sei noch einmal ausdrücklich darauf verwiesen, daß die i.w. jeweils aus einem Umschlagkorb 15 und einer Umschlaghaube 14 bestehenden Umschlageinheiten 8 vorzugsweise keinen eigenen Antrieb aufweisen, wie dieses an sich ersichtlich durchaus möglich ist, da dieses die Einrichtung und deren Steuerung weiterhin außerordentlich vereinfacht und noch störunanfälliger macht (einmal ganz abgesehen davon, daß damit natürlich auch die Investitionskosten entsprechend zu reduzieren sind).

Insbesondere unter Bezugnahme auf Fig. 29 sei schließlich noch darauf verwiesen, daß auch das landseitige Handling grundsätzlich in analoger Weise erfolgen kann, also insoweit abweichend von dem weiter oben anhand der Fig. 1 - 11 beschriebenen Procedere (s.d. insb. die Fig. 9 - 11). Hierfür stehen verschiedene Möglichkeiten zur Verfügung. So kann an der Pier (oder selbstverständlich auch an einer anderen Lager- bzw. Absetzstelle) bspw. ein Absetztisch bzw. -bord 51 vorhanden sein, wie er in Fig. 29 beispielhaft dargestellt ist, also mit einer Tischplatte 52 od.dgl., die eine der Be- bzw. Entladeöffnung 16 bzw. der Einführöffnung 47 entsprechende Durchgangsöffnung 47' aufweist, an welcher vorzugsweise ebenfalls ein Einweistrichter 41' einen dem Rezeß 50 des Einweistrichters 41 entsprechenden Rezeß aufweist, an dem die Umschlaghaube 14 beim Aufsetzen einer Umschlageinheit 8 zurückgehalten werden kann, um den Umschlagkorb 15 weiter absenken zu können. Dabei kann der Einweistrichter 41' ggf. lediglich als Trichtersektor ausgebildet sein, wie dieses in Fig. 29 angedeutet ist, und zwar auf der dem Land zugekehrten Seite des Absetztisches 51, doch kann ersichtlich auch dieser Einweistrichter 41' ggf. umlaufend ausgebildet sein. Wichtig ist, daß die lichte Höhe H zwischen der Unterseite der Tischplatte 52 und dem Boden wenigstens so groß ist wie die Höhe des Umschlagkorbes 15, um diesen frei absenken und entladen zu können. Zweckmäßigerweise ist die Höhe H (wenigstens) so groß, daß ein üblicher Gabelstapler unter den Absetztisch 51 bzw. dessen Tischplatte 52 fahren, und Fruchtpaletten 19 aus dem Umschlagkorb 15 entladen kann.

Eine weitere Möglichkeit für ein zweckmäßiges landseitiges Handling besteht bspw. darin, daß der Weg der Umschlaghaube 14 während des landseitigen Absenkvorgangs einer Umschlageinheit 8 durch Anhängung an eine federbelastete Seiltrommel od.dgl. derart begrenzt wird, daß die Umschlaghaube 14 in einer vorgegebenen Höhenposition über der jeweiligen Abstellfläche (bspw. einem Pier 2) höhenmäßig stehenbleibt, während der Umschlagkorb 15 der an dem Kranseil 6 hängenden Ladeeinheit 8 weiter bis zum Aufsetzen abgesenkt wird.

Ersichtlich sind unter Einhaltung des vorstehend an zwei Beispielen geschilderten Entladeprinzips, Umschlageinheiten 8 ohne gesonderten eigenen Antrieb zu verwenden, noch diverse andere Ausgestaltungen möglich.

Für den einschlägigen Fachmann ist ohne weiteres erkennbar, daß die vorstehend beschriebenen Elemente und Baugruppen, deren Betätigung und Steuerung etc. in vielfältiger Weise modifiziert werden können, ohne den Rahmen der vorliegenden Erfindung zu verlassen.

Obwohl sich dieses aus den vorstehenden Darlegungen zumindest für den Fachmann ganz von selbst ergeben dürfte, sei hier ausdrücklich darauf verwiesen, daß das erfindungsgemäße Umschlagsystem selbstverständlich auch für alle möglichen anderen Anwendungsfälle in höchst vorteilhafter Weise Verwendung finden kann, in denen Umschlaggut zwischen zwei Lagerstellen auf einfache und dennoch rasche Weise umgeschlagen werden soll, von denen i.a. wenigstens die eine ein witterungsgeschützter Raum ist, und wobei der Umschlagweg zwischen den beiden (ggf. Zwischen-)Lagerstellen wenigstens teilweise Umwelteinflüssen wie Niederschlägen, Flugsand, Sonneneinstrahlung od.dgl. ausgesetzt ist/sein kann.

## Patentansprüche

1. Verfahren zum Freiluflumschlag von witterungsempfindlichen Umschlaggütern (19), insb. Stückgut wie Bananen od.dgl., von einer ersten Lagerstelle (z.B. 3) an eine zweite Lagerstelle (z.B. 2), wobei sich die eine Lagerstelle in einem mit einer verschließbaren Be- und Entladeöffnung (16) versehenen, im übrigen nach außen geschlossenen Laderaum (3) insb. eines Schiffes (1) befindet, bei dem jeweils umzuschlagendes Umschlaggut (19) an seiner momentanen Lagerstelle stück- oder chargenweise in einen Förderbehälter (15) in der Art eines Umschlagkorbes od.dgl. verbracht wird, der an ein Hebezeug (4) angeschlagene Umschlagkorb (15) von dem Hebezeug (4) angehoben und dabei von einer Umschlaghaube (14) so überdeckt wird, daß er eng benachbart unter der Umschlaghaube (14) angeordnet ist, die so gebildete Umschlageinheit (8 = 14, 15) von dem Hebezeug (4) in Richtung auf die andere Lagerstelle gefördert wird, und ihr Umschlagkorb (15) dort relativ zu der Umschlaghaube (14) witterungsgeschützt abgesenkt wird, **dadurch gekennzeichnet, daß** zum Be- und Entladen des Laderaums (3) jeweils die gesamte Umschlageinheit (8) über der Be- und Entladeöffnung (16) des Laderaums (3) abgesenkt wird, wobei die Be- und Entladeöffnung (16) nach ihrem Öffnen und vor Beginn des Be- oder Entladevorgangs mit einer Abdeckung (17) versehen wird, mittels welcher eine Durchgangsöffnung (z.B. 47) zu bilden ist, deren Form und Größe der Außenkontur einer Umschlageinheit (8) so angepaßt ist, daß der Umschlagkorb (15) die Durchgangsöffnung der Abdeckung (17) beim Absenken der Umschlageinheit (8) passieren kann, während die gemeinsam mit dem Umschlagkorb (15) abgesenkte Umschlaghaube (14) von der Abdeckung (17) so zurückgehalten wird, daß sie die Durchgangsöffnung überdeckt, wenn der Umschlagkorb (15) in den Laderaum (3) abgesenkt ist, und wobei der auf das jeweilige Ent- bzw. Beladeniveau abgesenkte Umschlagkorb (15) nach seinem Ent- bzw. Beladen wieder angehoben und dabei von der die Durchgangsöffnung der Abdeckung (17) abdeckenden Umschlaghaube (14) überdeckt wird, und die Umschlageinheit (8) nach einem weiteren Anheben zur anderen Lagerstelle verbracht wird.

2. Verfahren nach A nspruch 1, **dadurch gekennzeichnet, daß** die im Ruhezustand regendicht verschlossene Abdeckung (17) beim Absenken einer Umschlageinheit (8) über der Be- und Entladeöffnung (16) so weit geöffnet wird, daß der Umschlagkorb (15) in die dabei gebildete Durchgangsöffnung eingefahren werden kann, und daß die Durchgangsöffnung der Abdeckung (17) nach dem Herausfahren des Umschlagkorbes (15) wieder verschlossen wird.

3. Verfahren nach Anspruch 2, **dadurch gekennzeichnet, daß** das Offnen und Verschließen der Abdeckung (17) selbsttätig gesteuert wird.

4. Verfahren nach einem oder mehreren der vorhergehenden Ansprüche, **dadurch ge-kennzeichnet, daß** die Umschlaghaube (14) beim dem Positionieren einer Umschlageinheit (8) an der Abdeckung (17) lösbar mit dieser verriegelt wird.

5. Verfahren nach Anspruch **4**, **dadurch gekennzeichnet, daß** die Umschlaghaube (14) beim Verriegeln selbsttätig abgedichtet wird.

6. Verfahren nach einem oder mehreren der vorhergehenden Ansprüche, **dadurch gekennzeichnet, daß** die Abdeckung (17) mittels eines zweiten Hebezeuges montiert bzw. demontiert wird.

7. Verfahren nach einem oder mehreren der vorhergehenden Ansprüche, **dadurch gekennzeichnet, daß** eine Umschlageinheit (8) mittels eines Steuersystems und/oder einer Führungseinrichtung so gesteuert wird, daß sie in einer der Be- und Entladeöffnung (16) benachbarten Stellung selbsttätig zur Be- und Entladeöffnung (16) bzw. der Durchgangsöffnung (z.B. 47) der auf dieser angeordneten Abdeckung (17) zentriert wird.

8. Verfahren nach Anspruch 7, **dadurch gekennzeichnet, daß** das Steuersystem einen Rechner aufweist, dem die Positionskoordinaten einer Umschlageinheit (8) bei deren Annäherung an die Be- und Entladeöffnung (16) durch von Gebern erzeugte elektrische Signale zugeleitet werden, und welcher unter Verwendung dieser Signale eine Idealsteuerung errechnet, deren Steuersignale bei nachfolgenden ähnlichen/gleichen Umschlageinheiten (8) zum Steuern des Hebezeuges (4) verwendet werden.

9. Verfahren nach einem oder mehreren der vorhergehenden Ansprüche, **dadurch gekennzeichnet, daß** zum Entladen des im wesentlichen vollständig beladenen Laderaums (3) zunächst das unmittelbar unterhalb der Be- und Entladeöffnung (16) gestaute Umschlaggut (19") sowie das hierzu benachbarte Umschlaggut in konventioneller Weise einzeln nacheinander entladen wird, um das Absenken des Umschlagkorbes (15) in den Laderaum (3) zu ermoglichen.

10. Verfahren nach einem oder mehreren der vorhergehenden Ansprüche, **dadurch gekennzeichnet, daß** das Be- und Entladen mit wenigstens zwei Kranen (4) erfolgt.

11. Einrichtung zum Freiluftumschlag von witterungsempfindlichen Umschlaggütern (19), insb. Stückgut wie Bananen od.dgl., von einer ersten Lagerstelle (z.B. 3) an eine zweite Lagerstelle (z.B. 2), wobei sich die eine Lagerstelle in einem mit einer verschließbaren Beund Entladeöffnung (16) versehenen, im übrigen nach außen geschlossenen Laderaum (3) insb. eines Schiffes (1) befindet, mit wenigstens einem Hebezeug (4) und wenigstens einem an das Hebezeug (4) anschlagbaren Förderbehälter (15) in der Art eines Umschlagkorbes od.dgl., dem eine relativ zu dem Umschlagkorb (15) begrenzt bewegbare Umschlaghaube (14) zugeordnet ist, mittels welcher der Umschlagkorb (15) beim Anheben durch das Hebezeug (4) unter Bildung einer Umschlageinheit (8) zu überdecken und in diesem Zustand in Richtung auf die andere Lagerstelle zu fördern ist, zur Durchführung des Verfahrens nach einem oder mehreren der vorhergehenden Ansprüche, **gekennzeichnet durch** eine Abdeckung (17) für die Be- und Entladeöffnung (16) des Laderaums (3), mittels welcher eine Durchgangsöffnung (z.B. 47) zu bilden ist, deren Form und Größe der Außenkontur einer Umschlageinheit (8) so angepaßt ist, daß deren Umschlagkorb (15) beim Absenken einer Umschlageinheit (8) die Durchgangsöffnung passieren kann, während die Umschlaghaube (14) von der Abdeckung (17) zurückgehalten wird und die Durchgangsöffnung überdeckt, wenn der Umschlagkorb (15) in den Laderaum (3) abgesenkt ist.

12. Einrichtung nach Anspruch 11, **dadurch gekennzeichnet, daß** die Abdeckung (17) mit einem Abdeckmittel (18) versehen ist, welches ihre Durchgangsöffnung im Ruhezustand regendicht verschließt, die Durchgangsöffnung beim Absenken einer Umschlageinheit (8) selbsttätig öffnet, und sie selbsttätig wieder verschließt, wenn die Umschlageinheit (8) wieder vollständig von der Abdeckung (17) angehoben worden ist.

13. Einrichtung nach Anspruch 11 oder 12, **gekennzeichnet durch** eine Steuereinrichtung sowie ggf. eine Führungseinrichtung (41), mittels welcher eine Umschlageinheit (8) jeweils so zu steuern ist, daß sie in einer der Durchgangsöffnung benachbarten Stellung zur Durchgangsöffnung zentriert wird.

14. Einrichtung nach Anspruch 13, **dadurch gekennzeichnet, daß** die Steuereinrichtung einen Rechner aufweist, dem die Positionskoordinaten einer Umschlageinheit (8) bei deren Annäherung an die Be- und Entladeöffnung (16) durch von Gebern erzeugte elektrische Signale zugeleitet werden, und welcher unter Verwendung dieser Signale eine Idealsteuerung errechnet, deren Steuersignale bei nachfolgenden ähnlichen/gleichen Umschlageinheiten (8) zum Steuern des Hebezeuges (4) verwendet werden.

15. Einrichtung nach Anspruch 13, **dadurch gekennzeichnet, daß** die Führungseinrichtung der Abdeckung (17) an deren Oberseite in der Art eines Trichters (41) ausgebildet ist.

16. Einrichtung nach einem oder mehreren der vorhergehenden Ansprüche 13 - 15, **dadurch gekennzeichnet, daß** an der Be- und Entladeöffnung (16) ein Leitstrahl- Emitter angeordnet ist; daß die Umschlageinrichtung (8) mit wenigstens einem Geber versehen ist, der seinen Ist-Abstand zum Leitstrahl feststellt, und ein entsprechendes Signal an die Steuereinrichtung übermittelt, von welcher der Ist-Wert mit einem vorgegebenen Soll-Wert verglichen wird, und bei einer Abweichung des Ist-Wertes vom Soll-Wert Steuersignale für eine Gegenmaßnahme erzeugt werden, mittels welcher die Abweichung korrigiert wird.

17. Einrichtung nach einem oder mehreren der vorhergehenden Ansprüche 11 - 16, **dadurch gekennzeichnet, daß** die Abdeckung (17) einen Rahmen (23) aufweist, auf dem eine die Durchgangsöffnung (47) der Abdeckung (17) enthaltende Plattform (48) bzw. ein die Durchgangsöffnung (47) aufweisender, antreibbarer Schlitten (42) in wenigstens einer Richtung horizontal verfahrbar angeordnet ist, wobei die Plattform (48) bzw. der Schlitten (42) einen die Durchgangsöffnung (47) umgebenden, sich nach oben erweiternden Einweistrichter (41) aufweist, und mit einer teleskopierbaren Gleitweg-Abdeckung versehen ist, deren Gleitelemente (18') unter teleskopierbarem Aus- bzw. Einfahren mit der Plattform (48) bzw. dem Schlitten (42) so zu verfahren sind, daß sie die jeweils nicht von der Plattform bzw. dem Schlitten überdeckten Abschnitte der Be- und Entladeöffnung (16) abdecken.

18. Einrichtung nach Anspruch 17, **dadurch gekennzeichnet, daß** der Schlitten (42) mit lösbar verriegelbaren Gleitschuhen (43) an Gleitschienen (40) des Rahmens (23) verfahrbar und in einer vorgegebenen Be- und Entladeposition lösbar zu verriegeln ist.

19. Einrichtung nach einem oder mehreren der Ansprüche 11 - 18, **dadurch gekennzeichnet, daß** die Abdeckmittel (18) der Abdeckung (17) jeweils aus einem rechtwinkligen Rahmen mit Abdeckblechen (18') bestehen, wobei der Rahmen an zwei einander gegenüberliegenden Seiten gleitend oder mittels Rollen (46) in einer Führung geführt ist.

20. Einrichtung nach Anspruch 19, **dadurch gekennzeichnet, daß** die Abdeckbleche (18') zur Horizontalen etwas (z.B. um 3°) geneigt sind.

21. Einrichtung nach einem oder mehreren der Ansprüche 17 - 20, **dadurch gekennzeichnet, daß** der Einweistrichter (41) einen Rezess (50) aufweist, an dem die Umschlaghaube (14) einer Umschlageinheit (8) bei deren Absenken in den Einweistrichter (41) formschlüssig zu halten ist, während der zugehörige Umschlagkorb (15) durch die Durchgangsöffnung (47) nach unten abzusenken ist.

22. Einrichtung nach einem oder mehreren der Ansprüche 11 - 21, **dadurch gekennzeichnet, daß** die Umschlageinheit (8) im angeschlagenen Zustand um Ihre Längsmittelachse (34) drehbar ist.

23. Einrichtung nach einem oder mehreren der Ansprüche 11 - 22, insb. nach Anspruch 21, **dadurch gekennzeichnet, daß** die Umschlageinheit (8) mit einer Pendeldämpfungseinrichtung versehen ist, mittels welcher ein seitliches Ausschlagen der an Seil (6) des Hebezeuges (4) angeschlagenen Umschlageinheit (8) und/oder deren Drehen um ihre Längsachse (34) durch Dämpfung zu reduzieren ist.

24. Einrichtung nach einem oder mehren der Ansprüche 11 - 23, **dadurch gekennzeichnet, daß** an der nicht von dem Laderaum (3) gebildeten Lagerstelle (2) ein Absetztisch (51) vorgesehen ist, der an seiner Oberseite eine der Durchgangsöffnung (47) der Abdeckung (17) entsprechende Durchgangsöffnune aufweist, wobei der vertikale Abstand (H) zwischen der Tischebene (52) und der darunter befindlichen Lager- bzw. Transportfläche (2) wenigstens so groß ist wie die Höhe des Umschlagkorbes (15).

25. Einrichtung nach Anspruch 24, **dadurch gekennzeichnet, daß** die Durchgangsöffnung der Tischplatte (52) an ihrer Oberseite mit einem (ggf. partiellen bzw. sekmentartigen) Einweistrichter (41') versehen ist.

26. Einrichtung nach einem oder mehreren der Ansprüche 11 - 25, **dadurch gekennzeichnet, daß** der vertikale Weg der Umschlaghaube (14) während des Absenkens durch Anhängung an eine vorzugsweise federbelastete Seiltrommel od.dgl. begrenzt ist.

27. Einrichtung nach einem oder mehreren der Ansprüche 11 - 26, **dadurch gekennzeichnet, daß** das Umschlaggut (19) an einer Lagerstelle (2) auf einem getakteten Förderer abzusetzen ist, dessen Fördernum nach Beladung mit wenigstens einer Stückguteinheit (19) gesteuert um einen vorgegebenen Längsabschnitt in Förderrichtung zu bewegen ist.

28. Einrichtung nach Anspruch 27, **dadurch gekennzeichnet, daß** ein Fördertakt jeweils durch entsprechende Geber, wie z.B. Lichtschranken oder Gewichtsmesser, selbsttätig einzuleiten ist, die nach entsprechender Bedämpfung bewirken, daß der Förderantrieb eingeschaltet wird und nach Fortfall der Bedämpfung ein Ausschalten des Förderantriebes auslösen.

29. Einrichtung nach einem oder mehreren der Ansprüche 11 - 28, **dadurch gekennzeichnet, daß** wenigstens zwei Krane (4) vorgesehen sind.

## Claims

1. A method of open-air transhipment of weather-sensitive goods (19) for transhipment, particularly smalls such as bananas or the like, from a first storage location (e.g. 3) to a second storage location (e.g. 2), one such storage location being located in a cargo space (3) provided with a closable loading and unloading opening (16) but otherwise closed to the exterior, particularly on a ship (1), wherein each item (19) for transhipment is brought, at its instantaneous storage location, piece-wise or batch-wise, into a conveying container (15) after the style of a transhipment basket or the like, the latter (15), attached to a hoist (4), is lifted by the hoist (4) and at the same time is so covered by a transhipment hood (14) as to be disposed beneath the said hood (14) in closely adjacent relationship, the transhipment unit (8 = 14, 15) thus formed is conveyed by the hoist (4) in the direction of the other storage location, where its transhipment basket (15) is lowered relatively to the transhipment hood (14) so as to be weather-protected, **characterised in that** for the purpose of loading and unloading the cargo space (3) the entire transhipment unit (8) is in each case lowered over the loading and unloading opening (16) of the cargo space (3), the loading and unloading opening (16) being provided, after its opening and before the beginning of the loading or unloading operation, with a cover (17) by means of which a passage opening (e.g. 47) can be formed, the shape and size of which is so adapted to the external contour of a transhipment unit (8) that the transhipment basket (15) can pass through the passage opening of the cover (17) during the lowering of the transhipment unit (8) while the transhipment hood (14) lowered jointly with the transhipment basket (15) is so held back from the cover (17) that it covers the passage opening when the transhipment basket (15) is lowered into the cargo space (3), and wherein the transhipment basket (15) lowered on to the respective unloading or loading level is raised again, after its unloading or loading, and at the same time covered by the transhipment hood (14) covering the passage opening of the cover (17), and the transhipment unit (8) is brought to the other storage location after further lifting.

2. A method according to claim 1, **characterised in that** the cover (17), which in the position of rest is closed so as to be rainproof, is opened to such an extent, when a transhipment unit (8) is lowered over the loading and unloading opening (16), that the transhipment basket (15) can be introduced into the passage opening formed in these circumstances, and **in that** the passage opening of the cover (17) is re-closed after the transhipment basket (15) has been retracted therefrom.

3. A method according to claim 2, **characterised in that** the opening and closing of the cover (17) is controlled automatically.

4. A method according to one or more of the preceding claims, **characterised in that** during the positioning of a transhipment unit (8) at the cover (17) the transhipment hood (14) is releasably locked thereto.

5. A method according to claim 4, **characterised in that** the transhipment hood (14) is automatically sealed during the locking.

6. A method according to one or more of the preceding claims, **characterised in that** the cover (17) is fitted and removed by means of a second hoist.

7. A method according to one or more of the preceding claims, **characterised in that** a transhipment unit (8) is so controlled by means of a control system and/or a guide means that in a position adjacent the loading and unloading opening (16) it is automatically centred in relation to the loading and unloading opening (16) or the passage opening (e.g. 47) of the cover (17) disposed thereon.

8. A method according to claim 7, **characterised in that** the control system comprises a computer to which are fed the position co-ordinates of a transhipment unit (8) during its approach to the loading and unloading opening (16), by means of electric signals generated by transmitters, and which, by using these signals, computes an ideal control, the control signals of which are used to control the hoist (4) in the case of subsequent similar/identical transhipment units (8).

9. A method according to one or more of the preceding claims, **characterised in that** for the purpose of unloading the substantially completely loaded cargo space (3) the transhipment item (19") initially stowed directly beneath the loading and unloading opening (16), and the transhipment item adjacent the same, are conventionally unloaded individually in succession in order to allow lowering of the transhipment basket (15) into the cargo space (3).

10. A method according to one or more of the preceding claims, **characterised in that** the loading and unloading is effected with at least two cranes (4).

11. An arrangement (4) for open-air transhipment of weather-sensitive goods (19) for transhipment, particularly smalls such as bananas or the like, from a first storage location (e.g. 3) to a second storage location (e.g. 2), one such storage location being located in a cargo space (3) provided with a closable loading and unloading opening (16) but otherwise closed to the exterior, particularly on a ship (1), with at least one hoist (4) and at least one conveying container (15) after the style of a transhipment basket or the like, which is adapted to be attached to the hoist (4) and with which there is associated a transhipment hood (14) movable to a limited degree relatively to the transhipment basket (15) and by means of which the transhipment basket (15) can be covered, during the lifting by the hoist (4), so as to form a transhipment unit (8), and is conveyed in that state towards the other storage location, for performing the method according to one or more of the preceding claims, **characterised by** a cover (17) for the loading and unloading opening (16) of the cargo space (3), by means of which cover (17) there can be formed a passage opening (e.g. 47), the shape and size of which is so adapted to the external contour of a transhipment unit (8) that the transhipment basket (15) thereof can pass through the passage opening during the lowering of a transhipment unit (8), while the transhipment hood (14) is held back from the cover (17) and covers the passage opening when the transhipment basket (15) is lowered into the cargo space (3).

12. An arrangement according to claim 11, **characterised in that** the cover (17) is provided with a cover means (18) which closes its passage opening so as to be rainproof in the position of rest, automatically opens the passage opening on the lowering of a transhipment unit (8), and recloses it automatically when the transhipment unit (8) has again been completely lifted from the cover (17).

13. An arrangement according to claim 11 or 12, **characterised by** a control device and, if required, a guide device (41), by means of which a transhipment unit (8) can be so controlled in each case as to be centred in relation to the passage opening in a position adjacent the same.

14. An arrangement according to claim 13, **characterised in that** the control device comprises a computer, to which are fed the position co-ordinates of a transhipment unit (8) during its approach to the loading and unloading opening (16), by means of electric signals generated by transmitters, and which, by using these signals, computes an ideal control, the control signals of which are used to control the hoist (4) in the case of subsequent similar/identical transhipment units (8).

15. An arrangement according to claim 13, **characterised in that** the guide device for the cover (17) is formed after the style of a hopper (41) at the top of the cover.

16. An arrangement according to one or more of the preceding claims 13 to 15, **characterised in that** a guide beam emitter is disposed at the loading and unloading opening (16); **in that** the transhipment device (8) is provided with at least one transmitter which detects its actual distance from the guide beam, and transmits a corresponding signal to the control device, by which the actual value is compared with a predetermined set value and in the event of a deviation of the actual value from the set value control signals are generated for countermeasure action by means of which the deviation is corrected.

17. An arrangement according to one or more of the preceding claims 11 to 16, **characterised in that** the cover (17) comprises a frame (23) on which a platform (48) containing the passage opening (47) of the cover (17), or a drivable cradle (42) comprising the passage opening (47), is disposed for horizontal movement in at least one direction, the platform (48) or cradle (42) comprising a guide hopper (41) which surrounds the passage opening (47) and widens out in the upward direction, and with a telescopic slideway cover, the sliding elements (18') of which can be so moved, with telescopic extension or retraction with the platform (48) or cradle (42), that they in each case cover those portions of the loading and unloading opening (16) which are not covered by the platform or the cradle.

18. An arrangement according to claim 17, **characterised in that** the cradle (42) is movable on rails (40) of the frame (23) by means of releasably lockable shoes (43) and can be releasably locked in a preset loading and unloading position.

19. An arrangement according to one or more of claims 11 to 18, **characterised in that** the cover means (18) of the cover (17) consist respectively of a rectangular frame with cover plates (18'), the frame being guided in a guide on two opposite sides slidingly or by means of rollers (46).

20. An arrangement according to claim 19, **characterised in that** the cover plates (18') are inclined somewhat to the horizontal (e.g. by 3°).

21. An arrangement according to one or more of claims 17 to 20, **characterised in that** the guide hopper (41) has a recess (50) at which the transhipment hood (14) of a transhipment unit (8) can be positively held during its lowering into the guide hopper (41), while the associated transhipment basket (15) is lowered down through the passage opening (47).

22. An arrangement according to any one or more of claims 11 to 21, **characterised in that** the transhipment unit (18) is rotatable about its longitudinal central axis (34) in the attached state.

23. An arrangement according to one or more of claims 11 to 22, particularly according to claim 21, **characterised in that** the transhipment unit (8) is provided with a swing damping device by means of which lateral deflection of the transhipment unit (8) attached to the cable (6) of the hoist (4) and/or its rotation about its longitudinal axis (34) can be reduced by damping.

24. An arrangement according to one or more of claims 11 to 23, **characterised in that** a set-down table (51) is provided at the storage location (2) not formed by the cargo space (3), and at its upper side has a passage opening corresponding to the passage opening (47) of the cover (17), the vertical distance (H) between the table plane (52) and the storage or transportation surface (2) situated therebeneath being at least equal to the height of the transhipment basket (15).

25. An arrangement according to claim 24, **characterised in that** the passage opening of the tabletop (52) is provided at its upper surface with a guide hopper (41') (which if required may be partial or segmental).

26. An arrangement according to one or more of claims 11 to 25, **characterised in that** the vertical path of the transhipment hood (14) is limited during the lowering by suspension from a preferably springloaded cable drum or the like.

27. An arrangement according to one or more of claims 11 to 26, **characterised in that** the transhipment item (19) at a storage location (2) is set down on a cyclic conveyor, the conveyor run of which, after loading with at least one transhipment unit (19), is moved controllably by a predetermined length increment in the conveying direction.

28. An arrangement according to claim 27, **characterised in that** a conveying cycle is initiated automatically by appropriate transmitters, for example light barriers or weight measuring means, and after corresponding damping cause the conveyor drive to be switched on and, after elimination of the damping, initiate disconnection of the conveyor drive.

29. An arrangement according to one or more of claims 11 to 28, **characterised in that** at least two cranes (4) are provided.

## Revendications

1. Procédé de transbordement à l'air libre de marchandises à tansborder (19) sensibles aux intempéries, en particulier des produis en morceaux, tels que des bananes ou analogues, depuis un premier poste de stockage (par exemple 3) à un deuxième poste de stockage (par exemple 2), le premier poste de stockage se trouvant dans un compartiment de chargement (3), en particulier d'un navire (1), muni d'une ouverture de chargement et de déchargement (16) obturable, compartiment de chargement au reste fermé vers l'extérieur, pour lequel chaque fois une marchandise à transborder est placée, par morceaux, ou par charge, à son poste de chargement momentané, dans un récipient de transport (15), réalisé à la façon d'une corbeille de transbordement ou analogue, la corbeille de transbordement (15), attachée à un engin de levage (4), est levée par l'engin de levage (4) et est alors recouverte par une hotte de transbordement (14), de manière que la corbeille de transbordement soit disposée de façon étroitement voisine au-dessous de la hotte de transbordement (14), l'unité de transbordement (8 = 14, 15) ainsi formée est transportée, par l'engin de levage (4), en direction de l'autre poste de stockage, et sa corbeille de transbordement (15) y étant descendue par rapport à la hotte de transbordement (14), d'une façon assurant une protection aux intempéries, **caractérisé en ce que**, pour charger et décharger le compartiment de chargement (3), chaque fois la totalité de l'unité de transbordement (8) est abaissée au-dessus de l'ouverture de chargement et de déchargement (16) du compartiment de chargement (3), l'ouverture de chargement et de déchargement (16), après son ouverture et avant le début du processus de chargement ou de déchargement, étant munie d'un couvercle (17) à l'aide duquel est formée une ouverture de passage (par exemple 47), dont la forme et la taille sont adaptées aux contours extérieurs de l'unité de transbordement (8) de manière que la corbeille de transbordement (15) puisse passer par l'ouverture de passage du couvercle (17) lors de la descente de l'unité de transbordement (8), tandis que la hotte de transbordement (14), descendue conjointement avec la corbeille de transbordement (15), puisse être retenue par le couvercle (17), de manière qu'elle recouvre l'ouverture de passage, lorsque la corbeille de transbordement (15) est descendue dans le compartiment de chargement (3), et où la corbeille de transbordement (15), descendue au niveau de déchargement ou de chargement respectif, après son déchargement ou son chargement, est de nouveau levée et alors recouverte par la hotte de transbordement (15), couvrant l'ouverture de passage du couvercle (17), et l'unité de transbordement (8) étant placée à un autre poste de stockage, après avoir procédé à un soulèvement supplémentaire.

2. Procédé selon la revendication 1, **caractérisé en ce que** le couvercle (17), qui, à l'état de repos, est fermé de façon étanche à la pluie, lors de la descente d'une unité de transbordement (8) sur l'ouverture de chargement et de déchargement (16), est ouvert à un degré faisant que la corbeille de transbordement (15) peut être introduite dans l'ouverture de passage alors formée, et **en ce que** l'ouverture de passage du couvercle (17) est de nouveau fermée après la sortie de la corbeille de transbordement (15).

3. Procédé selon la revendication 2, **caractérisé en ce que** l'ouverture et la fermeture du couvercle (17) sont commandées automatiquement.

4. Procédé selon l'une ou plusieurs des revendications précédentes, **caractérisé en ce que** la hotte de transbordement (14), lors du positionnement d'une unité de transbordement (8) sur le couvercle (17), est verrouillée de façon désolidarisable à celui-ci.

5. Procédé selon la revendication 4, **caractérisé en ce que** la hotte de transbordement (14) est fermée hermétiquement automatiquement lors du verrouillage.

6. Procédé selon l'une ou plusieurs des revendications précédentes, **caractérisé en ce que** le couvercle (17) est monté ou démonté au moyen d'un deuxième engin de levage.

7. Procédé selon l'une ou plusieurs des revendications précédentes, **caractérisé en ce qu'**une unité de transbordement (8) est commandée à l'aide d'un système de commande et/ou d'un dispositif de guidage, de manière que, en une position voisine de l'ouverture de chargement et de déchargement (16), elle soit centrée automatiquement par rapport à l'ouverture de chargement et de déchargement (16), ou par rapport à l'ouverture de passage (par exemple 47) du couvercle (17) disposé sur elle.

8. Procédé selon la revendication 7, **caractérisé en ce que** le système de commande présente un ordinateur, auquel sont amenées les coordonnées de position d'une unité de transbordement (8) lors de son approche de l'ouverture de chargement et de déchargement (16), au moyen de signaux électriques, produits par des capteurs, et qui, en utilisant ces signaux, calcule une commande idéale, dont les signaux de commande sont utilisés dans les unités de transbordement (8) analogues/identiques suivantes, pour effectuer la commande de l'engin de levage (4).

9. Procédé selon l'une ou plusieurs des revendications précédentes, **caractérisé en ce que**, pour décharger le compartiment de chargement (3) qui a été pratiquement complètement chargé, on commence par décharger individuellement les uns après les autres le produit à transborder (19"), accumulé directement au-dessous de l'ouverture de chargement et de déchargement (16), ainsi que le produit à transborder lui étant voisin, en procédant de manière classique et individuellement les uns après les autres, pour permettre la descente de la corbeille de transbordement (15) dans le compartiment de chargement (3).

10. Procédé selon l'une ou plusieurs des revendications précédentes, **caractérisé en ce que** le chargement et le déchargement se font avec au moins deux grues (4).

11. Dispositif de transbordement à l'air libre de produits à transborder (19) sensibles aux intempéries, en particulier des produits en morceaux, tels que des bananes et analogues, depuis un premier poste de stockage (par exemple 3) à un deuxième poste de stockage (par exemple 2), le premier poste de stockage se trouvant dans un compartiment de chargement (3), en particulier d'un navire (1), muni d'une ouverture de chargement et de déchargement (16) obturable, compartiment de chargement au reste fermé vers l'extérieur, avec au moins un engin de levage (4) et au moins un récipient de transport (15), pouvant être relié à l'engin de levage (4), à la manière d'une corbeille de transbordement ou analogue, à laquelle est associée une hotte de transbordement (14), déplaçable de façon limitée par rapport à la corbeille de transbordement (15), hotte de transbordement au moyen de laquelle la corbeille de transbordement (15), lors du levage au moyen de l'engin de levage (4), peut être couverte en formant une unité de transbordement (8) et, dans cet état, transportée en direction de l'autre poste de stockage, pour la mise en oeuvre du procédé selon l'une ou plusieurs des revendications précédentes, **caractérisé par** un couvercle (17), pour l'ouverture de chargement et de déchargement (16) du compartiment de chargement (3), couvercle au moyen duquel est formée une ouverture de passage (par exemple 47), dont la forme et la taille sont adaptées aux contours extérieurs de l'unité de transbordement (8), de manière que, lors de la descente de l'unité de transbordement (8), sa corbeille de transbordement (15) puisse passer par l'ouverture de passage, tandis que la hotte de transbordement (14) est retenue par le couvercle (17) et couvre l'ouverture de passage, lorsque la corbeille de transbordement (15) est descendue dans le compartiment de chargement.

12. Dispositif selon la revendication 11, **caractérisé en ce que** le couvercle (17) est muni d'un moyen de recouvrement (18), fermant de façon étanche à la pluie son ouverture de passage, lorsque l'on est à l'état de repos, ouvrant l'ouverture de passage automatiquement lors de la descente d'une unité de transbordement (8) et la fermant de nouveau automatiquement lorsque l'unité de transbordement (8) a été de nouveau soulevée du couvercle (17).

13. Dispositif selon la revendication 11 ou 12, **caractérisé par** un dispositif de commande ainsi que, le cas échéant, un dispositif de guidage (41), au moyen duquel une unité de transbordement (8) peut chaque fois être commandée de manière à être centrée par l'ouverture de passage, en une position voisine de l'ouverture de passage.

14. Dispositif selon la revendication 13, **caractérisé en ce que** le dispositif de commande présente un ordinateur, auquel sont amenées les coordonnées de position d'une unité de transbordement (8) lors de son approche de l'ouverture de chargement et de déchargement (16), au moyen de signaux électriques, produits par des capteurs, et qui, en utilisant ces signaux, calcule une commande idéale, dont les signaux de commande sont utilisés dans les unités de transbordement (8) analogues/identiques suivantes, pour effectuer la commande de l'engin de levage (4).

15. Dispositif selon la revendication 13, **caractérisé en ce que** le dispositif de guidage du couvercle (17) est réalisé sur sa face supérieure à la manière d'un entonnoir (41).

16. Dispositif selon l'une ou plusieurs des revendications 13 à 15 précédentes, **caractérisé en ce que**, sur l'ouverture de chargement et de déchargement (16), est disposé un émetteur de rayon de guidage; **en ce que** le dispositif de transbordement (8) est muni d'au moins un capteur, qui constate son espacement réel par rapport au rayon de guidage et transmet un signal correspondant au dispositif de commande, d'où la valeur réelle est comparée à une valeur de consigne prédéterminée et qui, en cas d'écart entre la valeur réelle et la valeur de consigne, produit des signaux de commande pour une action inverse, au moyen de laquelle l'écart est corrigé.

17. Dispositif selon l'une ou plusieurs des revendications 11 à 16 précédentes, **caractérisé en ce que** le couvercle (17) présente un cadre (23), sur lequel est disposée, de façon déplaçable horizontalement en au moins une direction, une plate-forme (48), contenant l'ouverture de passage (47) du couvercle (17), ou un chariot (42), pouvant être entraîné, présentant l'ouverture de passage (47), sachant que la plate-forme (48), respectivement le chariot (42), présentent un entonnoir d'introduction (41), allant en s'élargissant vers le haut, entourant l'ouverture de passage (17), et est muni d'un recouvrement de chemin de glissement télescopique, dont les éléments glissants (18') sont à déplacer avec déploiement ou rétraction télescopique, avec la plate-forme (48), respectivement le chariot (42), de manière qu'ils recouvrent des tronçons, chaque fois non-recouverts par la plate-forme ou le chariot, de l'ouverture de chargement et de déchargement (16).

18. Dispositif selon la revendication 17, **caractérisé en ce que** le chariot (42) est déplaçable, avec des patins de glissement (43), pouvant être verrouillés, désolidarisables, sur des glissières (40) du cadre (23), et est verrouillable de façon désolidarisable, en une position de chargement et de déchargement prédéterminée.

19. Dispositif selon l'une ou plusieurs des revendications 11 à 18, **caractérisé en ce que** les moyens de recouvrement (18) du couvercle (17) sont chacun formés d'un cadre rectangulaire, comprenant des tôles de recouvrement (18'), le cadre étant guidé dans un guidage, sur deux côtés opposés l'un à l'autre, par glissement ou à l'aide de galets (46).

20. Dispositif selon la revendication 19, **caractérisé en ce que** les tôles de recouvrement (18') sont quelque peu inclinées (par exemple de 3°) par rapport à l'horizontale.

21. Dispositif selon l'une ou plusieurs des revendications 17 à 20, **caractérisé en ce que** l'entonnoir d'introduction (41) présente une cavité (50), sur laquelle la hotte de transbordement (14) d'une unité de transbordement (8) est maintenue, par une liaison à ajustement de forme, lors de son abaissement dans l'entonnoir d'introduction (41), tandis que la corbeille de transbordement (15) afférente est abaissée vers le bas, à travers l'ouverture de passage (47).

22. Dispositif selon l'une ou plusieurs des revendications 11 à 21, **caractérisé en ce que** l'unité de transbordement (8), à l'état amarré, est susceptible de tourner autour de son axe longitudinal (34).

23. Dispositif selon l'une ou plusieurs des revendications 11 à 22, en particulier selon la revendication 21, **caractérisé en ce que** l'unité de transbordement (8) est munie d'un dispositif d'amortissement pendulaire, au moyen duquel un débattement latéral de l'unité de transbordement (8), amarrée au câble (6) de l'engin de levage (4), et/ou sa rotation autour de son axe longitudinal (34), est à réduire par un amortissement.

24. Dispositif selon l'une ou plusieurs des revendications 11 à 23, **caractérisé en ce que**, au point de stockage (2) formé par le compartiment de chargement (3), est prévue une table de dépose (51) présentant, sur sa face supérieure, une ouverture de passage correspondant à l'ouverture de passage (47) du couvercle (17), sachant que l'espacement vertical (H), entre le plan de table (52) et la face de stockage ou de transport (2) se trouvant au-dessous, est au moins de la valeur de la hauteur de la corbeille de transbordement (15).

25. Dispositif selon la revendication 24, **caractérisé en ce que** l'ouverture de passage de la plaque de table (52) est munie, sur sa face supérieure, d'un entonnoir d'introduction (41') (le cas échéant partiel ou du genre de segment).

26. Dispositif selon l'une ou plusieurs des revendications 11 à 25, **caractérisé en ce que** la course de déplacement verticale de la hotte de transbordement (14), pendant la descente, est limitée par accrochage à un tambour à câble, de préférence chargé par un ressort, ou analogue.

27. Dispositif selon l'une ou plusieurs des revendications 11 à 26, **caractérisé en ce que** le produit à transborder (19) est déposé en un poste de stockage (2), sur un transporteur à mouvement cadencé, dont le brin de transporteur, après chargement avec au moins une unité de produit en morceaux (19), est commandé pour se déplacer d'une distance prédéterminée dans la direction du transport.

28. Dispositif selon la revendication 27, **caractérisé en ce qu'**une cadence de transport est introduite automatiquement, chaque fois au moyen de capteurs correspondants, tels que par exemple des barrières photoélectriques, ou de peseurs, qui, après un amortissement correspondant, provoquent la mise en service de l'entraînement de transporteur et, après suppression de l'amortissement, déclenchent la mise hors service de l'entraînement de transporteur.

29. Dispositif selon l'une ou plusieurs des revendications 11 à 28, **caractérisé en ce que** sont prévues au moins deux grues (4).
